(19) Europäisches Patentamt / European Patent Office / Office européen des brevets

(11) **EP 4 429 371 A1**

(12) **EUROPEAN PATENT APPLICATION**
published in accordance with Art. 153(4) EPC

(43) Date of publication:
**11.09.2024 Bulletin 2024/37**

(21) Application number: **22900283.7**

(22) Date of filing: **16.11.2022**

(51) International Patent Classification (IPC):
**H04W 72/04** (2023.01)

(52) Cooperative Patent Classification (CPC):
**H04L 5/00; H04W 72/04; H04W 72/0453;**
**H04W 72/0457; H04W 72/12; H04W 72/23**

(86) International application number:
**PCT/CN2022/132252**

(87) International publication number:
**WO 2023/098478 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 CN 202111448736**

(71) Applicant: **Huawei Technologies Co., Ltd.**
**Shenzhen, Guangdong 518129 (CN)**

(72) Inventors:
• **LI, Ruijie**
  **Shenzhen, Guangdong 518129 (CN)**
• **GUAN, Lei**
  **Shenzhen, Guangdong 518129 (CN)**
• **LI, Shengyu**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **RESOURCE INDICATION METHOD AND COMMUNICATION APPARATUS**

(57) This application discloses a resource indication method and a communication apparatus. The method includes: A terminal device receives first indication information from a network device. The first indication information indicates a first frequency domain resource. The terminal device transmits a first channel on the first frequency domain resource. The first frequency domain resource belongs to a first frequency domain unit of a BWP, the BWP further includes a second frequency domain unit, and a transmission direction of a signal on the second frequency domain unit and a transmission direction of a signal on the first frequency domain unit are independently configured, so that resource indication is more flexible, and resource conflicts are reduced.

Network device ——— Terminal device

S1501: First indication information, where the first indication information indicates a first frequency domain resource, the first frequency domain resource belongs to a first frequency domain unit in at least two frequency domain units included in a BWP of the terminal device, and a transmission direction of a signal on a second frequency domain unit and a transmission direction of a signal on the first frequency domain unit are independently configured

S1502: Send or receive a first channel on the first frequency domain resource

FIG. 15

**Description**

**CROSS-REFERENCE TO RELATED APPLICATIONS**

This application claims priority to Chinese Patent Application No. 202111448736.1, filed with the China National Intellectual Property Administration on November 30, 2021 and entitled "RESOURCE INDICATION METHOD AND COMMUNICATION APPARATUS", which is incorporated herein by reference in its entirety.

**TECHNICAL FIELD**

This application relates to the field of wireless communication technologies, and in particular, to a resource indication method and a communication apparatus.

**BACKGROUND**

A network device sends a resource indication to a terminal device, to indicate a resource used for downlink (downlink, DL) transmission or a resource used for uplink (downlink, DL) transmission. Currently, resource configuration and resource indication manners within a bandwidth part (bandwidth part, BWP) are not flexible enough.

**SUMMARY**

This application provides a resource indication method and a communication apparatus, so that resource indication is more flexible, and a resource conflict is reduced.

According to a first aspect, a resource indication method is provided, and may be performed by a first communication apparatus. The first communication apparatus may be a communication device or a communication apparatus, for example, a chip system, that can support a communication device in implementing a function needed in the method. The following provides descriptions by using an example in which the communication device is a terminal device. The method includes the following steps.

The terminal device receives first indication information from a network device. The first indication information indicates a first frequency domain resource. The terminal device transmits a first channel on the first frequency domain resource. The first frequency domain resource belongs to a first frequency domain unit of a BWP, the BWP further includes a second frequency domain unit, a transmission direction of a signal on the second frequency domain unit is indicated by second indication information, and a transmission direction of a signal on the first frequency domain unit is indicated by third indication information.

Correspondingly, according to a second aspect, a resource indication method is provided, and may be performed by a second communication apparatus. The second communication apparatus may be a communication device or a communication apparatus, for example, a chip system, that can support a communication device in implementing a function needed in the method. The following uses an example in which the communication device is a network device for descriptions. The method includes the following steps.

The network device sends first indication information to a terminal device. The first indication information indicates a first frequency domain resource. The network device sends or receives a first channel on the first frequency domain resource. The first frequency domain resource belongs to a first frequency domain unit of a bandwidth part (bandwidth part, BWP), the BWP further includes a second frequency domain unit, a transmission direction of a signal on the second frequency domain unit is indicated by second indication information, and a transmission direction of a signal on the first frequency domain unit is indicated by third indication information.

The transmission direction of the signal on the second frequency domain unit is indicated by the second indication information, and the transmission direction of the signal on the first frequency domain unit is indicated by the third indication information. It may also be considered that the transmission direction of the signal on the second frequency domain unit and the transmission direction of the signal on the first frequency domain unit are independently configured, so that resource indication is more flexible, and a resource conflict is reduced.

In a possible implementation, the first channel is a physical downlink control channel (physical downlink control channel, PDCCH). The first frequency domain unit may include N resource block groups, and the first frequency domain resource may be one or more of the N resource block groups. An index (namely, a start RB index) of a 1st resource block (resource block, RB) in a 1st resource block group of the N resource block groups is determined based on a start RB index of the first frequency domain unit. To be specific, when the network device transmits the PDCCH on the first frequency domain unit, a start frequency domain location that is of the first frequency domain unit and that can be used to transmit the PDCCH is determined based on the start RB index of the first frequency domain unit. Because signals on the first frequency domain unit have only one transmission direction at the same time, the network device configures, for the terminal device based on the start RB index of the first frequency domain unit, a frequency domain resource used to transmit the first channel. In this way, all frequency domain resources configured by the network device for the terminal device can be used to transmit the first channel, thereby avoiding the resource conflict.

In a possible implementation, the network device does not configure an RB offset, the index of the 1st RB in the 1st resource block group of the N resource block groups satisfies $n \times \lceil N1/n \rceil$, where N1 is a start common resource block (common resource block, CRB) index of the first frequency domain unit, n is a quantity of resource blocks included in the 1st resource block group, and n is a positive integer.

In a possible implementation, the network device configures an RB offset, the RB offset is a first offset, and the index of the 1st RB in the 1st resource block group of the N resource block groups may be determined based on the start RB index of the first frequency domain unit and the first offset. The index of the 1st RB in the 1st resource block group of the N resource block groups satisfies $N1 + N_{RB}^{offset}$, where N1 is a start CRB index of the first frequency domain unit, and $N_{RB}^{offset}$ is the first offset.

In a possible implementation, the first channel is a PDCCH, and the first indication information further indicates that a resource block group A cannot be used to transmit the first channel. The resource block group A includes a first resource block set and a second resource block set, the first resource block set belongs to the first frequency domain unit, and the second resource block set belongs to the second frequency domain unit. To avoid the resource conflict, when indicating the first frequency domain resource, the first indication information further indicates that the resource block group A cannot be used to transmit the PDCCH.

In a possible implementation, the first channel is a PDCCH, and the terminal device receives fourth indication information from the network device. The fourth indication information indicates that a resource block group A cannot be used to transmit the first channel, and the fourth indication information is different from the first indication information.

In a possible implementation, the first channel is a PDCCH, and a protocol predefines that a resource block group A cannot be used to transmit the first channel. The resource block group A includes a first resource block set and a second resource block set, the first resource block set belongs to the first frequency domain unit, and the second resource block set belongs to the second frequency domain unit.

In a possible implementation, on a same time domain resource, the transmission direction of the signal on the first frequency domain unit is opposite to the transmission direction of the signal on the second frequency domain unit. The first frequency domain resource does not include an RB in the resource block group A.

In a possible implementation, the terminal device receives the PDCCH on a frequency domain resource in the first frequency domain resource other than the first resource block set.

In a possible implementation, the first channel is a PDCCH, and the first indication information further indicates that a resource block group A can be used to transmit the first channel. The resource block group A includes a first resource block set and a second resource block set, the first resource block set belongs to the first frequency domain unit, and the second resource block set belongs to the second frequency domain unit. It may be understood that, provided that transmission directions of signals on at least one RB included in the resource block group A are all downlink transmission directions, the at least one RB may be used to receive the PDCCH. Therefore, even if the resource block group A includes RBs belonging to different frequency domain units, the network device may indicate that the resource block group A can be used to receive the PDCCH. After receiving the first indication information, the terminal device may not receive the PDCCH on the resource block group A.

In a possible implementation, on a same time domain resource, the transmission direction of the signal on the first frequency domain unit is the same as the transmission direction of the signal on the second frequency domain unit. That is, transmission directions of signals on the RBs included in the resource block group A are the same. The first indication information indicates that the resource block A can be used to transmit the PDCCH, and the terminal device may transmit the PDCCH on the resource block group A.

In a possible implementation, on a same time domain resource, the transmission direction of the signal on the first frequency domain unit is opposite to the transmission direction of the signal on the second frequency domain unit, and the first indication information indicates that the resource block A can be used to transmit the PDCCH. Even if the first indication information indicates that the resource block A can be used to transmit the PDCCH, the terminal device does not receive the PDCCH on the resource block group A. To be specific, even if the first indication information indicates that the resource block group A can be used to transmit the first channel, if transmission directions of channels on the RBs included in the resource block group A are opposite, to avoid the resource conflict, the terminal device does not receive the PDCCH on the resource block group A.

In a possible implementation, the first channel is a physical uplink control channel (physical uplink control channel, PUCCH). The network device sends fifth indication information. Correspondingly, the terminal device receives the fifth indication information from the network device, where the fifth indication information indicates a correspondence between N resource sets and M time units; and determines one or more target resource sets of the N resource sets based on the correspondence and a time unit occupied by the first channel. The first frequency domain resource belongs to the one or more target resource sets. In this solution, a PUCCH resource set may be configured based on a time unit, and different PUCCH resource sets may be configured for different time units. In comparison with a conventional technology in which a same PUCCH resource set is configured for different time units, more resources can be used to transmit the PUCCH, and PUCCH transmission is more flexible.

In a possible implementation, the first indication information further indicates the one or more target resource sets of the N resource sets.

In a possible implementation, the terminal device determines a first target resource set from a plurality of target resource sets based on a payload (payload) of the PUCCH. The first frequency domain resource belongs to the first target resource set.

In a possible implementation, the first indication information indicates the first frequency domain resource in the first target resource set.

In a possible implementation, the first channel is one PUSCH in PUSCH repetition transmission. The first indication information further indicates a correspondence between a plurality of frequency domain units and a plurality of time units, and the first frequency domain unit is determined based on the correspondence. In other words, for different time units, the PUSCH may be located in different frequency domain units. In this way, more transmission opportunities can be provided for the PUSCH, thereby improving PUSCH transmission reliability.

In a possible implementation, the first indication information further indicates a plurality of frequency domain units that can be used to transmit the PUSCH, and the first frequency domain unit is a frequency domain unit determined from the plurality of frequency domain units based on a predefined rule. In this solution, the network device may configure, for the terminal device, the plurality of frequency domain units that can be used to transmit the PUSCH. Each time the terminal device transmits the PUSCH, the terminal device may select, based on a specific rule from the plurality of frequency domain units, a frequency domain unit used to transmit the PUSCH. In this way, more transmission opportunities can also be provided for the PUSCH, thereby improving PUSCH transmission reliability.

In a possible implementation, the first frequency domain unit is a frequency domain unit with a largest index or a smallest index in the plurality of frequency domain units.

In a possible implementation, the first channel is a physical downlink shared channel (physical downlink shared channel, PDSCH) or a physical uplink shared channel (physical uplink shared channel, PUSCH), and the first frequency domain resource satisfies at least one of the following:

The first frequency domain resource includes a resource block group B, and the resource block group B includes X resource blocks RBs, where X has a correspondence with a total quantity of RBs included in the first frequency domain unit;

the first frequency domain resource includes a resource block group B, the resource block group B includes X resource blocks RBs, and the resource block group B may be a resource block group other than a $1^{st}$ resource block group and a last resource block group; a $1^{st}$ resource block group included in the first frequency domain resource may include Y resource blocks RBs, where Y is determined based on a start RB index of the first frequency domain unit and a total quantity of RBs included in the first frequency domain unit; and X and Y may be the same, or may be different; and

the first frequency domain resource includes a resource block group B, the resource block group B includes X resource blocks RBs, and a last resource block group included in the first frequency domain resource includes Z resource blocks, where Z is determined based on a start RB index of the first frequency domain unit and a quantity of RBs included in the first frequency domain unit. That is, when the BWP includes a plurality of frequency domain units, a quantity of RBs included in a resource block group of a frequency resource used to transmit the PDSCH or the PUSCH is related to the total quantity of RBs included in the first frequency domain unit. X and Z may be the same, or may be different.

In a possible implementation, the first indication information includes a resource indicator value (resource indicator value, RIV), and the RIV is determined based on a first index and the quantity of RBs included in the first frequency domain unit. The first index is determined based on the start RB index of the first frequency domain unit and an index of a $1^{st}$ RB of the BWP. To be specific, when the BWP includes a plurality of frequency domain units, the RIV is based on the start RB index of the first frequency domain unit, the index of the $1^{st}$ RB included in the BWP, and the quantity of RBs included in the first frequency domain unit.

In a possible implementation, a frequency domain resource corresponding to the first channel on a first symbol is a second frequency domain resource, a frequency domain resource corresponding to the first channel on a second symbol is a third frequency domain resource, the first symbol is located before the second symbol, the second frequency domain resource and the third frequency domain resource belong to the first frequency domain resource, and a start location of the second frequency domain resource is different from a start location of the third frequency domain resource. When the first channel is the PUCCH, the terminal device determines the start location of the third frequency domain resource based on an index of a $1^{st}$ RB included in the first frequency domain unit. When the first channel is the PUSCH, the terminal device determines the start location of the third frequency domain resource based on a quantity of RBs included in the second frequency domain unit and a second offset value. The second offset value is an offset between the start location of the second frequency domain resource and the start location of the third frequency domain resource.

In a possible implementation, the second offset value is one candidate value in a first candidate value set. The quantity of RBs included in the first frequency domain unit is greater than or equal to X, and the first candidate value set includes B 1 candidates. Alternatively, the quantity of RBs included in the first frequency domain unit is less than X, and the first candidate value set includes B2 candidates.

In a possible implementation, X=50.

In a possible implementation, B 1=4.

In a possible implementation, B2=2.

In a possible implementation, the first channel carries channel state information (channel state information, CSI), the CSI is in one-to-one correspondence with K subbands, the K subbands are K subbands in M subbands included in the third frequency domain unit, K is less than or equal to M, the third frequency domain unit is a frequency domain unit in which a channel state information reference signal (channel state information reference signal, CSI-RS) corresponding to the CSI is located, and a quantity of RBs included in each of the K subbands is determined based on a quantity of RBs included in the third frequency domain unit.

In a possible implementation, downlink control information (downlink control information, DCI) used to schedule the first channel on the first frequency domain unit is first DCI, and DCI used to schedule a second channel on a fourth frequency domain unit is second DCI. The first DCI and the second DCI may satisfy one or more of the following: The first DCI and the second DCI belong to different search spaces; or a time-frequency resource for blind detection on the first DCI and a time-frequency resource for blind detection on the second DCI do not overlap; or payload sizes of the first DCI and the second DCI are the same. In this way, overheads of blind detection on the PDCCH by the terminal device can be reduced.

In a possible implementation, the payload sizes of the first DCI and the second DCI each are P, and the method further includes: The terminal device parses the first DCI or the second DCI based on Q. Q is a quantity of bits required to indicate the first channel.

For example, when P is less than Q, the terminal device may extend the first DCI from P bits to Q bits, and then parse the first DCI based on the Q bits obtained through extension. On the contrary, when P is greater than Q, the terminal device may obtain first Q bits or last Q bits of the P bits of the first DCI to parse the first DCI.

According to a third aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the terminal device in the first aspect, or the communication apparatus may be an apparatus, for example, a chip or a chip system, that can support the terminal device in the first aspect in implementing a function needed in the method provided in the first aspect.

In a possible design, the communication apparatus includes a corresponding means (means) or module configured to perform the method in the first aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example of the first aspect. For details, refer to the detailed descriptions in the method example. Details are not described herein again.

According to a fourth aspect, an embodiment of this application provides a communication apparatus. The communication apparatus has a function of implementing behavior in the method embodiment of the second aspect. For beneficial effects, refer to the descriptions of the second aspect. Details are not described herein again. The communication apparatus may be the network device in the second aspect, or the communication apparatus may be an apparatus, for example, a chip or a chip system, that can support the network device in the second aspect in implementing a function needed in the method provided in the second aspect.

In a possible design, the communication apparatus includes a corresponding means (means) or module configured to perform the method in the second aspect. For example, the communication apparatus includes a processing unit (sometimes also referred to as a processing module or a processor) and/or a transceiver unit (sometimes also referred to as a transceiver module or a transceiver). These units (modules) may perform a corresponding function in the method example of the second aspect. For details, refer to the detailed descriptions in the method example. Details are not described herein again.

According to a fifth aspect, an embodiment of this application provides a communication apparatus. The communication apparatus may be the communication apparatus in the third aspect or the fourth aspect in the foregoing embodiment, or a chip or a chip system disposed in the communication apparatus in the third aspect or the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device in the foregoing method embodiment, or perform the method performed by the network device in the foregoing method embodiment.

According to a sixth aspect, an embodiment of this application provides a communication apparatus. The communication apparatus includes an input/output interface and a logic circuit. The input/output interface is configured to input and/or output information. The logic circuit is configured to perform the method according to any one of the first aspect and the second aspect.

According to a seventh aspect, an embodiment of this application provides a chip system. The chip system includes a processor, and may further include a memory and/or a communication interface. The chip system is configured to implement the method in the first aspect or the second aspect. In a possible implementation, the chip system further includes the memory, configured to store a computer program. The chip system may include a chip, or may include a chip and another discrete component.

According to an eighth aspect, an embodiment of this application provides a communication system. The communication system includes at least one communication apparatus in the third aspect and at least one communication apparatus in the fourth aspect.

According to a ninth aspect, this application provides a computer-readable storage medium. The computer-readable storage medium stores a computer program. When the computer program is run, the method in any one of the first aspect and the second aspect is implemented.

According to a tenth aspect, a computer program product is provided. The computer program product includes computer program code. When the computer program code is run, the method in any one of the first aspect and the second aspect is performed.

For beneficial effects of the third aspect to the tenth aspect and the implementations of the third aspect to the tenth aspect, refer to the descriptions of the first aspect or the second aspect, or the beneficial effects of the first aspect or the second aspect and the implementations of the first aspect or the second aspect.

## BRIEF DESCRIPTION OF DRAWINGS

FIG. 1 is a diagram of a network architecture to which an embodiment of this application is applicable;
FIG. 2 is a diagram of a complementary frame structure according to an embodiment of this application;
FIG. 3 is a diagram of a CORESET resource indication in a conventional technology;
FIG. 4 is a diagram of a CORESET resource indication according to an embodiment of this application;
FIG. 5 is a diagram of a PUCCH resource indication according to an embodiment of this application;
FIG. 6 is a diagram of a Type 0 resource indication according to an embodiment of this application;
FIG. 7 is a diagram of a resource indicated in FIG. 2;
FIG. 8 is a diagram of a Type 1 resource indication according to an embodiment of this application;
FIG. 9 is a diagram of repetition Type A transmission with frequency hopping according to an embodiment of this application;
FIG. 10 is a diagram of repetition Type B transmission with frequency hopping according to an embodiment of this application;
FIG. 11 is a diagram of PUSCH repetition Type A transmission with intra-slot frequency hopping according to an embodiment of this application;
FIG. 12 is a diagram of PUSCH repetition Type A transmission with inter-slot frequency hopping according to an embodiment of this application;
FIG. 13 is a diagram of PUSCH repetition Type B transmission with inter-repetition frequency hopping according to an embodiment of this application;
FIG. 14 is a diagram of a scenario to which an embodiment of this application is applicable;
FIG. 15 is a schematic flowchart of a resource indication method according to an embodiment of this application;
FIG. 16 is a diagram of a structure of a communication apparatus according to an embodiment of this application; and
FIG. 17 is a diagram of another structure of a communication apparatus according to an embodiment of this application.

## DESCRIPTION OF EMBODIMENTS

The technical solutions provided in embodiments of this application are applicable to a 5G mobile communication system, for example, an NR system, or are further applicable to a next-generation mobile communication system or another similar communication system. This is not specifically limited.

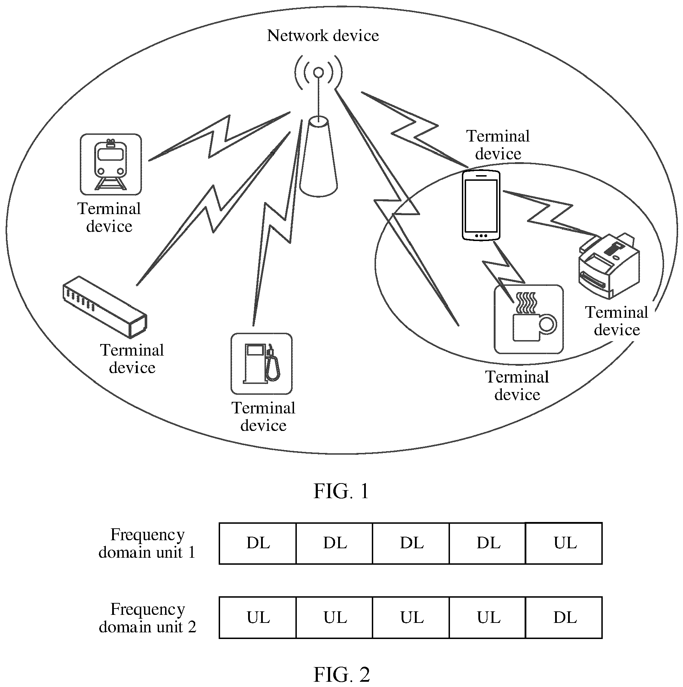

FIG. 1 shows a network architecture to which an embodiment of this application is applied. FIG. 1 includes a network device and six terminal devices. Certainly, a quantity of terminal devices in FIG. 1 is merely an example, and may be less or more. It should be noted that FIG. 1 is merely an example. Types of devices included in the communication system are not limited in embodiments of this application. For example, the communication system may further include another network device, for example, a wireless relay device or a wireless backhaul device. The network device is an access device that connects the terminal device to the mobile communication system in a wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) that are of the base station, and may further complete a function of a service data adaptation protocol (service data adaptation protocol, SDAP). The DU completes functions of a radio link control layer and a media access control (media access control, MAC) layer that are of the base station, and may further complete a part or all of functions of a physical layer. For specific descriptions of the foregoing protocol layers, refer to technical specifications related to the 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in this embodiment of this application.

The terminal device has a wireless transceiver function, and may send a signal to the network device, or receive a signal from the network device. The terminal device may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, a smart grid, smart furniture, smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

The terminal device may further include a relay (relay). Alternatively, it is understood that any device that can perform data communication with a base station may be considered as the terminal device. If various terminal devices described above are located in a vehicle (for example, placed in the vehicle or installed in the vehicle), the terminal devices may be all considered as vehicle-mounted terminal devices. The vehicle-mounted terminal device, for example, is also referred to as an on-board unit (on-board unit, OBU). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement the method in this application. Direct communication (PC5) interface communication is supported between the terminal devices, that is, transmission is supported using a sidelink.

In addition, in embodiments of this application, the terminal device may be an apparatus configured to implement a function of a terminal, or may be an apparatus, for example a chip system, that can support the terminal device in implementing the function. The apparatus may be installed in the terminal device. For example, the terminal device may alternatively be a vehicle detector. In this embodiment of this application, the chip system may include a chip, or may include a chip and another discrete component. In the technical solutions provided in embodiments of this application, an example in which the apparatus configured to implement a function of a terminal is the terminal device is used for describing the technical solutions provided in embodiments of this application.

To facilitate understanding of the technical solutions provided in embodiments of this application, some technical terms in embodiments of this application are first explained and described.

(1) A BWP may also be referred to as a bandwidth part, and is a segment of contiguous frequency domain resources in frequency domain. The BWP includes a plurality of RBs. In this application, a size of the BWP may also be understood as a quantity of RBs included in the BWP. The BWP may be an uplink BWP and a downlink BWP. The uplink BWP is used by the terminal device to send an uplink signal, and a bandwidth of the uplink BWP may exceed a maximum bandwidth that can be used by the terminal device to send the uplink signal. The downlink BWP is used by the terminal device to receive a downlink signal, and a bandwidth of the downlink BWP may exceed a maximum bandwidth used by the terminal device to receive the downlink signal.

In embodiments of this application, the BWP may include a plurality of frequency domain units, and transmission directions of signals on the plurality of frequency domain units may be independently configured, or transmission directions of signals on the plurality of frequency domain units may be configured using different indication information. In other words, on a same time domain resource, the transmission directions of the plurality of frequency domain units included in the BWP may be the same, or may be different, or transmission directions of a part of frequency domain units may be the same and transmission directions of a part of frequency domain units may be different. For example, the BWP includes a frequency domain unit 1 and a frequency domain unit 2. A transmission direction of a signal on the frequency domain unit 1 may be an uplink transmission direction, and a transmission direction of a signal on the frequency domain unit 2 may be a downlink transmission direction.

For example, FIG. 2 is a diagram of the BWP. A frame structure on the frequency domain unit 1 includes five slots, where first four slots are DL slots, and a fifth slot is a UL slot. A frame structure on the frequency domain unit 2 also includes five slots. A difference from the frequency domain unit 1 lies in that first four slots in the frequency domain unit 2 are UL slots, and a fifth slot is a DL slot. Because a resource used for downlink transmission and a resource used for uplink transmission exist at the same time, an uplink signal and a downlink signal may be transmitted at the same time, so that flexibility of resource configuration and resource indication is improved. It should be noted that a configuration in which transmission directions of signals on two frequency domain units shown in FIG. 2 are always opposite on a same time domain resource may also be referred to as a complementary frame structure. For example, transmission directions of the frequency domain unit 1 and the frequency domain unit 2 are always opposite in a same slot. Optionally, the frequency domain unit may be considered as a frequency band.

(2) A resource block (resources block, RB) is one of units representing a frequency domain resource. The RB in this application may be a physical resource block (physical resource block, PRB).

(3) A resource block group (resource block group, RBG) includes at least one RB. A quantity of RBs included in one resource block group is not limited in embodiments of this application. In this application, quantities of RBs included in different resource block groups may be the same, or may be different.

(4) A frequency domain unit may be a segment of frequency domain resources in a BWP. For example, the BWP may include a plurality of frequency domain units. In this application, one frequency domain unit is a minimum granularity at which a transmission direction can be independently configured in the BWP.

(5) A time unit may be one or more symbols, one or more slots, one or more subframes, one or more frames, or the like. A time domain length occupied by one time unit is not limited in embodiments of this application.

(6) "At least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" usually indicates an "or" relationship between the associated objects before and after 44. "At least one item (piece) of the following" or a similar expression thereof means any combination of these more than 10 items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are used for distinguishing between a plurality of objects, but are not intended to limit an order, a time sequence, priorities, or importance of the plurality of objects. For example, a first terminal device and a second terminal device are merely used to distinguish between different terminal devices, but do not indicate different priorities, importance, or the like of the two terminal devices. In embodiments of this application, "if" and "if" may be interchangeable, and unless otherwise specified, "when" and "in a case in which..." may be interchangeable. [X] represents rounding up X.

The foregoing describes some technical terms in embodiments of this application. The following describes the technical solutions in embodiments of this application. Embodiments of this application are intended to design how a network device indicates, to a terminal device, a resource used to receive or send information. The following separately describes resource indication manners in different scenarios with reference to specific scenarios.

Scenario 1: PDCCH resource indication.

The network device sends downlink control information (downlink control information, DCI) to the terminal device through a PDCCH. One piece of DCI is transmitted on one PDCCH. The terminal device blindly detects the DCI information carried on the PDCCH. The network device configures, for the terminal device, resource information for blind detection on the PDCCH. The resource information may include information about a search space and a control resource set (control resource set, CORESET). The terminal device may determine a PDCCH candidate resource set based on the resource information configured by the network device.

The CORESET may specify a frequency domain location of the PDCCH and a quantity of time domain symbols. A quantity of time domain symbols occupied by the PDCCH in time domain may be 1, 2, or 3. Different CORESET identifiers may be preconfigured for various CORESETs. In this way, the different control resource sets can be distinguished using the CORESET identifiers. For example, if there are a control resource set 1 and a control resource set 2, a CORESET identifier of the control resource set 1 may be set to p1, and a CORESET identifier of the control resource set 2 may be set to p2. The network device may indicate a corresponding CORESET by using a CORESET identifier. The network device may indicate a frequency domain resource in the CORESET by using a bitmap (bitmap). For example, 0 indicates that a corresponding frequency domain resource cannot be used to transmit the PDCCH, and 1 indicates that a corresponding frequency domain resource can be used to transmit the PDCCH. The following describes a specific PDCCH resource indication method.

In a conventional technology, the network device may configure the bitmap by using an information element "frequency domain resource (frequencyDomainResource)", to indicate the frequency domain resource. One bit in the bitmap corresponds to one physical resource block (physical resource block, PRB) group, and one PRB group includes six contiguous RBs. Indication using the bitmap is performed in ascending order of indexes of PRB groups. A CRB index of a $1^{st}$ RB included in a $1^{st}$ PRB group is determined depending on whether the network device configures indication information of an RB offset (rb-Offset) for the terminal device. For example, the network device does not configure the indication information of rb-Offset, and the CRB index of the $1^{st}$ RB included in the $1^{st}$ PRB group is $6 \times \lceil N_{BWP}^{start}/6 \rceil$

, where $N_{BWP}^{start}$ is a start CRB index included in a BWP. If the network device configures the indication information of rb-Offset, the CRB index of the $1^{st}$ RB included in the $1^{st}$ PRB group is $N_{BWP}^{start} + N_{RB}^{offset}$, where $N_{RB}^{offset}$ is a value indicated by the indication information of rb-Offset. It may be understood that the CRB index is described relative to a common reference point (Point A) of resource block grids (resource block grids). It may be understood that the common reference point is a reference point selected to indicate a frequency domain location. For details, refer to clause 4.4.4.2 in 3rd Generation Partnership Project (3rd generation partnership project, 3GPP) technical specification (technical specification, TS) 38.211 V16.4.0.

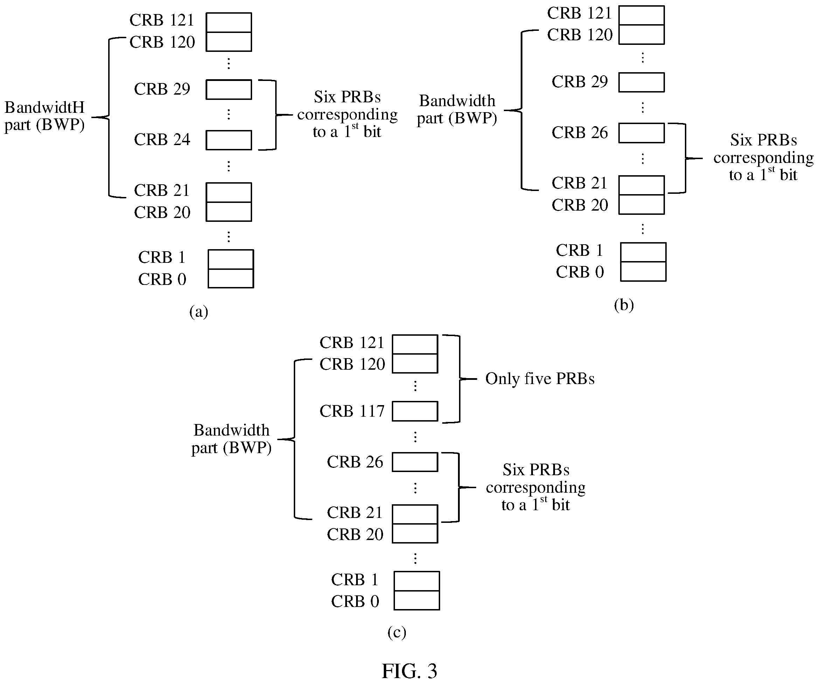

For example, FIG. 3 is a diagram of an indication of a resource for PDCCH transmission. In (a) in FIG. 3, an example in which the network device does not configure the indication information of rb-Offset is used. In (b) in FIG. 3, an example in which the network device configures the indication information of rb-Offset is used. In (a) and (b) in FIG. 3, an example in which $N_{BWP}^{start}$ is 21 and the BWP occupies 100 RBs in total is used. The network device sends resource indication information to the terminal device, to indicate a resource configured by the network device for the terminal device. The resource indication information may be one bitmap, and one bit in the bitmap corresponds to one PRB group, in other words, each bit corresponds to six RBs, to indicate the resource for PDCCH transmission. In (a) in FIG. 3, the CRB index of the $1^{st}$ RB included in the $1^{st}$ PRB group is: $6 \times \lceil N_{BWP}^{start}/6 \rceil = 24$. In (b) in FIG. 3, it is assumed that the indication information of rb-Offset configured by the network device indicates that an offset is 0. In this case, the CRB index of the $1^{st}$ RB included in the $1^{st}$ PRB group is: $N_{BWP}^{start} + N_{RB}^{offset} = 21$. It should be noted that, if not all six RBs indicated by one bit are included in the BWP, the bit is set to 0, as shown in (c) in FIG. 3. In (c) in FIG. 3, starting from a CRB index of 21, each bit indicates six PRBs. If a case in which only five RBs of six RBs indicated by a specific bit belong to the BWP occurs, the bit is set to 0.

In the scenario 1, if a transmission direction of a signal on the BWP of the terminal device is a downlink transmission direction, the terminal device may determine, based on the bitmap included in the resource indication information sent by the network device, the resource used for PDCCH transmission. That is, the resource used for PDCCH transmission is determined based on a quantity of RBs included in the BWP and a CRB index of a $1^{st}$ RB in the BWP. However, when the BWP includes a plurality of frequency domain units, and transmission directions of signals on the plurality of frequency domain units include uplink transmission and downlink transmission, in other words, the BWP may include both a resource used for downlink transmission and a resource used for uplink transmission, if the network device still indicates a frequency domain resource to the terminal device by using a bitmap, the indicated frequency domain resource may include both the resource used for uplink transmission and the resource used for downlink transmission, that is, a conflict may be caused. In addition, if an index of a $1^{st}$ RB included in a $1^{st}$ resource block group of N resource block groups is still determined based on an index of the $1^{st}$ RB in the BWP, the N resource block groups may include the resource used for uplink transmission.

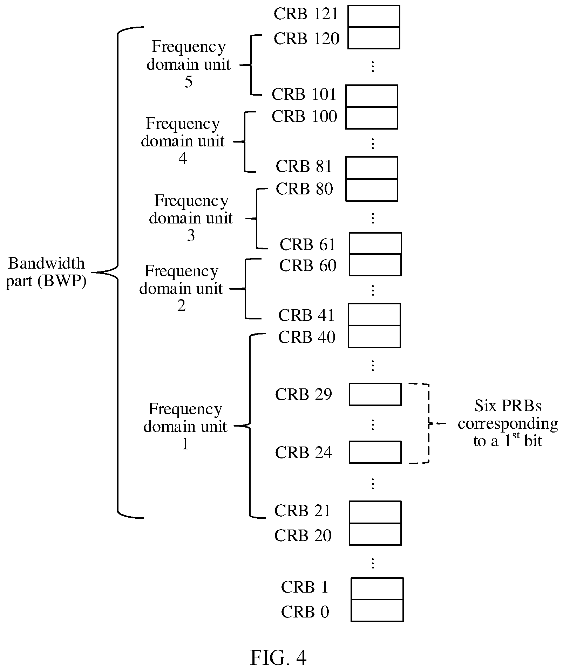

However, if the BWP includes at least two frequency domain units, transmission directions of signals on the at least two frequency domain units include an uplink transmission direction and a downlink transmission direction. For example, with reference to FIG. 4, an example in which a resource block is a PRB and one PRB group includes six RBs is used. It is assumed that the BWP includes 100 RBs in total from an index of 21 to an index of 120, in other words, the RB index of the $1^{st}$ RB in the BWP is 21. As shown in FIG. 4, the BWP includes five frequency domain units, for example, a frequency domain unit 1 to a frequency domain unit 5, and each frequency domain unit includes 20 RBs. It is assumed that a transmission direction of a signal on the frequency domain unit 1 is an uplink transmission direction, in other words, the frequency domain unit 1 is a resource used for uplink transmission. A transmission direction of a signal on the frequency domain unit 2 is a downlink transmission direction, in other words, the frequency domain unit 2 is a resource used for downlink transmission. In comparison with FIG. 2, in a current PDCCH resource indication manner, if the network device does not configure the indication information of rb-Offset, it is determined, based on the index of the 1st RB in the BWP, that the RB index of the 1st RB included in the 1st PRB group of the N PRB groups is:

$$6 \times \lfloor N_{\mathrm{BWP}}^{\mathrm{start}}/6 \rfloor = 24$$

. In other words, the 1st PRB group of the N PRB groups includes PRBs whose indexes are 24 to 29, but the PRBs whose indexes are 24 to 29 belong to the frequency domain unit 1, which is the resource used for uplink transmission and clearly cannot be used to receive the PDCCH.

Scenario 2: PUCCH resource indication.

The terminal device sends uplink control information (uplink control information, UCI), for example, a scheduling request (scheduling request, SR) or channel state information (channel state information, CSI), to the network device through a PUCCH. In a conventional technology, a PUCCH resource set is defined in a protocol. Each PUCCH resource set includes one or more resources that can be used to transmit the PUCCH, and the protocol specifies that each terminal device may be associated with one or more PUCCH resource sets.

A configuration of each PUCCH resource set may include parameters such as a PUCCH resource set identifier (pucch-ResourceSetId), a resource list (resourceList), and a maximum payload (maxPayloadSize). pucch-Resource-SetId indicates an identifier (identifier, ID) of the PUCCH resource set, resourceList indicates a resource included in the PUCCH resource set, and resourceList includes a plurality of resourceIds. maxPayloadSize indicates a maximum quantity of bits (bits) that can be carried by a resource included in the PUCCH resource set. A configuration of each PUCCH resource may include a resource identifier (resouceId), a PUCCH format (format), and some parameters related to the PUCCH format. A PUCCH resource set associated with the terminal device and parameters included in the associated PUCCH resource set may be preconfigured, or may be indicated by the network device to the terminal device. It should be noted that specific names of the parameters such as pucch-ResourceSetId, resourceList, and maxPayloadSize are not limited in this embodiment of this application.

The network device may indicate the terminal device to use one or more PUCCH resources in a target resource set, and the terminal device selects, from the target resource set based on an indication of the network device, a PUCCH resource to be used to send the PUCCH. It may be understood that the terminal device is associated with one or more PUCCH resource sets, and the target resource set belongs to the one or more PUCCH resource sets associated with the terminal device. The terminal device may determine the target resource set from a plurality of associated PUCCH resource sets. The following separately describes how the terminal device determines the target resource set and how the terminal device determines, based on the resource indication of the network device, the PUCCH resource used to send the PUCCH.

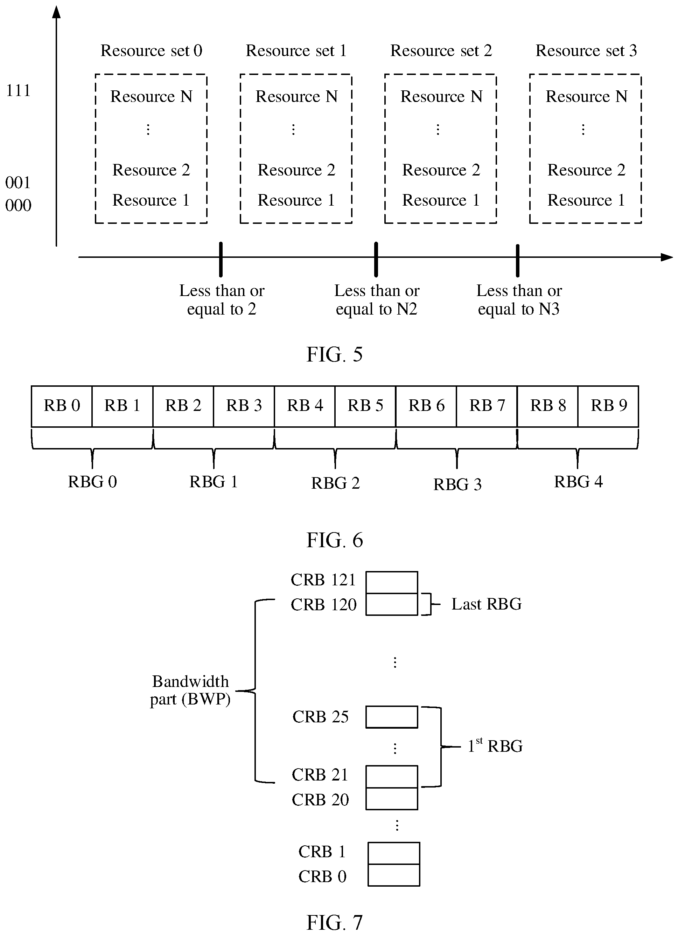

The terminal device may determine, based on a payload (payload) size of sending the UCI, the target resource set from the plurality of PUCCH resource sets associated with the terminal device. The payload size that is of the UCI and that is supported by the terminal device may be divided into a plurality of intervals by using maxPayloadSize corresponding to each PUCCH resource set associated with the terminal device. For example, FIG. 5 is a diagram of a PUCCH resource indication. In FIG. 5, an example in which the terminal device is associated with four resource sets is used. The four PUCCH resource sets are a resource set 0, a resource set 1, a resource set 2, and a resource set 3. maxPayloadSize in the resource set 0 is 2 bits, maxPayloadSize in the resource set 1 is N2 bits, maxPayloadSize in the resource set 2 is N3 bits, and maxPayloadSize in the resource set 3 is N4 bits. A payload size that is of a PUCCH and that can be supported by the terminal device may be divided into four intervals by using the four PUCCH resource sets, and the four intervals are respectively (0 bits, 2 bits], (2 bits, N2 bits], (N2 bits, N3 bits], and (N3 bits, N4 bits]. (0 bits, 2 bits] corresponds to the resource set 0, (2 bits, N2 bits] corresponds to the resource set 1, (N2 bits, N3 bits] corresponds to the resource set 2, and (N3 bits, N4 bits] corresponds to the resource set 3.

The terminal device selects, as a target resource set, a PUCCH resource set corresponding to an interval to which the payload size of the sent UCI belongs, and sends the PUCCH by using a PUCCH resource in the target resource set.

In the scenario 2, PUCCH resources included in each PUCCH resource set are resources of an entire BWP. When the BWP includes a plurality of frequency domain units, and the plurality of frequency domain units include a frequency domain unit whose transmission direction is uplink transmission and a frequency domain unit whose transmission direction is downlink transmission, a quantity of PUCCH resource sets that can be used for uplink transmission in a same time period decreases, thereby reducing flexibility. For example, the BWP includes a plurality of frequency domain units whose transmission directions are different, a PUCCH resource set includes eight resources, four resources of the eight resources correspond to a frequency domain unit 1, and the other four resources correspond to a frequency domain unit 2. In this case, only four PUCCH resources can be used in a same time period, and flexibility is low. If all PUCCH resources included in the PUCCH resource set are resources that belong to the frequency domain unit 1, when a transmission direction of a signal on the frequency domain unit 1 is an uplink transmission direction, flexibility is high. However, when a transmission direction of a signal on the frequency domain unit 2 is a downlink transmission direction, because the frequency domain unit 2 does not include a PUCCH resource, the UCI cannot be transmitted.

Scenario 3: PDSCH resource indication or PUSCH resource indication. Without loss of generality, the following uses a PDSCH as an example to describe a resource indication. For the PUSCH resource indication, refer to a PDSCH resource indication method. Details are not described again. PDSCH frequency domain resource indication includes two indication methods, and the two indication manners may be referred to as Type (Type) 0 and Type 1. The following describes in detail a Type 0 resource indication and a Type 1 resource indication.

A frequency domain granularity of Type 0 is a resource block group, and the network device may indicate, by using a bitmap, a frequency domain resource occupied by a PDSCH. One bit in the bitmap corresponds to one RBG. For example, FIG. 6 is a diagram of the Type 0 resource indication. In FIG. 6, an example in which a bandwidth is 10 RBs and a size of an RBG is 2 is used. That is, the 10 RBs are divided into five RBGs. If resource indication information sent by the network device to the terminal device is "10001", the PDSCH occupies an RBG 0 and an RBG 4. A smaller quantity of RBs included in the RBG indicates higher flexibility obtained when the frequency domain resource is indicated using the bitmap, but overheads of the resource indication are high. On the contrary, if the RBG includes a large quantity of RBs, although the overheads of the resource indication can be reduced, flexibility of allocation of frequency domain resources is low. A size of a BWP is a quantity of RBs included in the BWP. The size of the BWP is configured by the network device. A case in which the size of the BWP is not an integer multiple of the size of the RBG may occur. For example, the size of the BWP is 100, and the size of the RBG is 8. In view of this, it is currently stipulated that:

A quantity of RBs included in a 1st RBG is: $RBG_0^{size} = P - N_{BWP,i}^{start} mod P$ . It is assumed that the size of the BWP is 100, the size of the RBG is 8, and a start RB index of the BWP is 21. In this case, $RBG_0^{size} = 8 - 21 \bmod(8) = 5$ . A quantity $RBG_{last}^{size}$ of RBs included in a last RBG satisfies the following rule:

If $\left(N_{BWP,i}^{start} + N_{BWP,i}^{size}\right) mod P$ is greater than 0, $RBG_{last}^{size} = \left(N_{BWP,i}^{start} + N_{BWP,i}^{size}\right) mod P$ ; otherwise, $RBG_{last}^{size} = P$ . P is a quantity of RBs included in any RBG between the 1st RBG and the last RBG. A quantity of RBGs

$$N_{RBG} = \left\lceil \left(N_{BWP,i}^{size} + \left(N_{BWP,i}^{start} mod P\right)\right) / P \right\rceil$$

included in one BWP is: , where $N_{BWP,i}^{size}$ is a quantity of RBs included in the BWP, P is a size of an RBG, ( ) mod( ) represents a modulo operation, for example, 10 mod(3)=1, and $N_{BWP,i}^{start}$ is a start RB index of the BWP.

It may be understood that, an example in which the BWP includes 100 RBs, the start RB index of the BWP is 21, and the size of the RBG is 8 is used. In this case, a resource indicated by the Type 0 resource indication shown in FIG. 6 is shown in FIG. 7. To be specific, the quantity of RBs included in the 1st RBG is 5, the quantity of RBs included in the last RBG is 1, and remaining RBGs each include eight RBs.

Compared with the Type 0 resource indication, the Type 1 resource indication may indicate a start RB ($RB_{start}$) of a frequency domain resource and a length of RBs $L_{RBs}$ occupied by the frequency domain resource. $L_{RBs}$ indicates a quantity of RBs contiguously occupied by the frequency-domain resource. It should be noted that $RB_{start}$ is an interval between the start RB of the frequency domain resource and a 1st RB of the BWP. It may also be considered that $RB_{start}$ is not an absolute start RB of the frequency domain resource, but is a virtual resource block (virtual resource block, VRB), and the VRB and the 1st RB of the BWP can be used to determine the start RB of the frequency domain resource. An index of a 1st VRB in the BWP may start from 0.

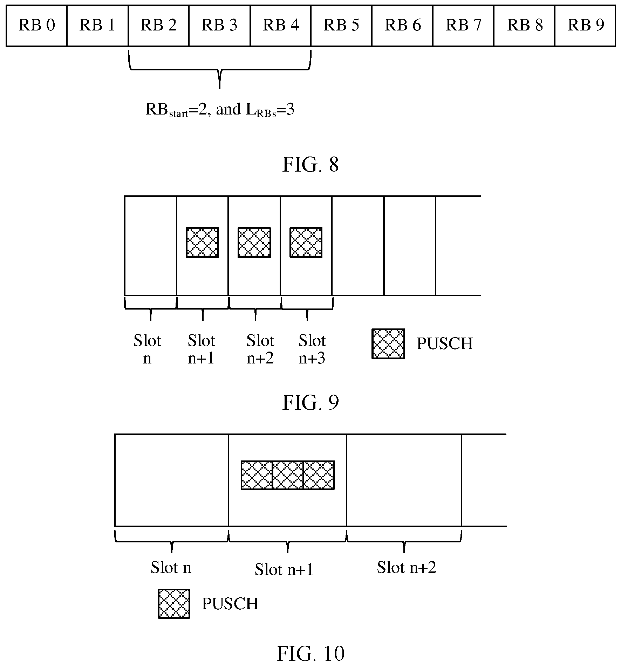

For example, FIG. 8 is a diagram of the Type 1 resource indication. In FIG. 8, an example in which a bandwidth is 10 RBs, $RB_{start}=2$, and $L_{RBs}=3$ is used. In this case, frequency domain resources occupied by the PDSCH are an RB 2, an RB 3, and an RB 4.

Because the Type 1 resource indication indicates a frequency domain resource by indicating $RB_{start}$ and $L_{RBs}$, in an alternative solution, the frequency domain resource may alternatively be indicated using a resource indication value (resource indication value, RIV). The RIV may be determined based on $RB_{start}$ and $L_{RBs}$. The RIV, $RB_{start}$, and $L_{RBs}$ satisfy the following formula:

$$RIV = N_{BWP}^{size}(L_{RBs} - 1) + RB_{start},$$

where $(L_{\text{RBs}} - 1) \leq \lfloor N_{BWP}^{size}/2 \rfloor$ ; or

$$RIV = N_{BWP}^{size}\left(N_{BWP}^{size} - L_{\text{RBs}} + 1\right) + \left(N_{BWP}^{size} - 1 - \text{RB}_{\text{start}}\right),$$

where $N_{BWP}^{size}$ is a size of a BWP.

In addition, if indication information for scheduling the PDSCH is carried in a DCI format 1_2, a frequency domain resource of the PDSCH may be indicated using $\text{RBG}_{\text{start}}$ and $L_{\text{RBGs}}$. $\text{RBG}_{\text{start}}$ indicates a number of a start RBG of the frequency domain resource, and $L_{\text{RBGs}}$ indicates a quantity of contiguous RBGs included in the frequency domain resource. That is, by using the indication information for scheduling the PDSCH in the DCI format 1_2, contiguous RBGs may be scheduled using an RBG as a granularity. Similarly, the RIV may be used to indicate the frequency domain resource. The RIV may be determined based on $\text{RBG}_{\text{start}}$ and $L_{\text{RBGs}}$. The RIV, $\text{RBG}_{\text{start}}$, and $L_{\text{RBGs}}$ satisfy the following formula:

$$RIV = N_{RBG}(L_{\text{RBGs}} - 1) + \text{RBG}_{\text{start}},$$

where $(L_{\text{RBGs}} - 1) \leq \lfloor N_{RBG}/2 \rfloor$ ; or

$$RIV = N_{RBG}(N_{RBG} - L_{\text{RBGs}} + 1) + (N_{RBG} - 1 - \text{RBG}_{\text{start}}) \ ,$$

where $N_{RBG}$ is a quantity of RBGs included in the BWP.

It should be understood that, similar to that in the PDSCH resource indication, there are also two indication manners for a frequency domain resource of a PUSCH: a Type 0 resource indication and a Type 1 resource indication. A difference lies in that, when indication information for scheduling the PUSCH is carried in a DCI format 0_2, contiguous RBGs may be scheduled using an RBG as a granularity.

In the scenario 3, the terminal device may determine, based on a resource indication sent by the network device, a frequency domain resource used to transmit the PDSCH or the PUSCH. However, in the PDSCH or PUSCH resource indication, the frequency domain resource is calculated based on the size of the BWP and a start CRB index corresponding to the BWP. In addition, in the Type 1 resource indication, $\text{RB}_{\text{start}}$ is calculated based on a 1st RB of the BWP. Similar to that in the scenario 1 and the scenario 2, when the BWP includes a plurality of frequency domain units, and the plurality of frequency domain units include a frequency domain unit whose transmission direction is uplink transmission and a frequency domain unit whose transmission direction is downlink transmission, only a part of frequency domain resources in the BWP can be used to transmit the PDSCH or the PUSCH, and if the current Type 0 resource indication or Type 1 resource indication is still used to indicate a resource to the terminal device, a conflict may be caused. For example, it is assumed that the BWP includes 100 RBs, and the 100 RBs are an RB 0 to an RB 99. The RB 0 to an RB 49 are used for uplink transmission, and an RB 50 to the RB 99 are used for downlink transmission. If the Type 1 resource indication is used to configure, for the terminal device, a frequency domain resource for scheduling the PDSCH, it is determined that a start RB of the frequency domain resource starts from 0. However, the RB 0 to the RB 49 are used for the uplink transmission, and the PDSCH cannot be transmitted. It can be learned that the current PDSCH and PUSCH resource indication manners are not applicable to the scenario shown in FIG. 2.

Scenario 4: Indication of a resource for PUSCH transmission with frequency hopping. Frequency hopping (frequency hopping) is a communication mode in which a frequency domain resource used in an information transmission process is changed based on a rule. The frequency hopping includes inter-slot frequency hopping and intra-slot frequency hopping. The inter-slot frequency hopping means that a frequency domain resource used for information transmission remains unchanged in a slot, but the frequency domain resource used for the information transmission changes between different slots based on a predetermined rule. The intra-slot frequency hopping means that a frequency domain resource used for information transmission changes in a slot based on a predetermined rule.

There are two PUSCH repetition types, which are, for example, referred to as repetition Type (repetition Type) A and repetition Type B. It should be noted that specific names of the two types of repetition transmission are not limited in this embodiment of this application.

PUSCH repetition Type A means that a PUSCH is repeatedly transmitted in a plurality of slots, each slot corresponds to one PUSCH transmission in PUSCH repetition transmission, and PUSCHs in different transmissions are transmitted in different slots. In a process of PUSCH repetition transmission with the repetition Type A, if an invalid slot or an invalid symbol is encountered, sending is canceled. It may be understood that, for the PUSCH, the invalid slot may be a slot configured for downlink transmission, and/or a slot that is configured and that cannot be used for uplink transmission. The invalid symbol is, for example, a symbol used for downlink transmission, a symbol used for transmitting a synchronization signal and a physical broadcast channel (physical broadcast channel, PBCH) block (synchronization signal and PBCH block, SSB), a symbol used for transmitting a system information block 1 (system information block, SIB 1), or a symbol that cannot be used for transmitting uplink information. For example, FIG. 9 is a diagram of the repetition Type A. In FIG. 9, an example in which a quantity of repetition transmissions is 3 is used. In other words, the PUSCH is repeatedly sent in three consecutive slots.

PUSCH repetition Type B means a plurality of continuous PUSCH repetition transmissions. Because the PUSCH may be transmitted for a plurality of times in one slot, in comparison with the repetition Type A, a transmission delay of the PUSCH may be reduced. For example, FIG. 10 is a diagram of the repetition Type B. In FIG. 10, an example in which a quantity of repetition transmissions is 3 is used. In FIG. 10, an example in which the three repetition transmissions are performed in one slot is used.

Indications of resources for transmission with different PUSCH repetition types with frequency hopping are also different, and are separately described below.

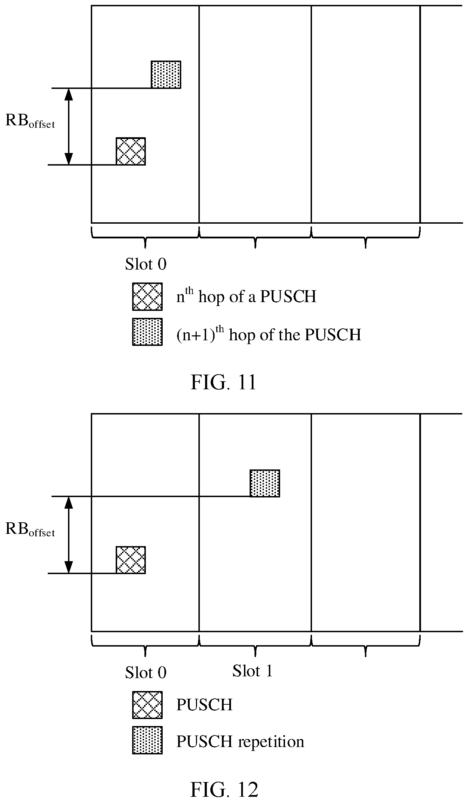

FIG. 11 is a diagram of PUSCH repetition Type A transmission with intra-slot frequency hopping. In FIG. 11, an example in which an $n^{th}$ hop and an $(n+1)^{th}$ hop that are of a PUSCH are in a slot 0 is used. It is assumed that a quantity of symbols occupied by the PUSCH is $N_{symb}^{PUSCH,s}$. In this case, a quantity of symbols occupied by the $n^{th}$ hop is $\lfloor N_{symb}^{PUSCH,s}/2 \rfloor$, and a quantity of symbols occupied by the $(n+1)^{th}$ hop is $N_{symb}^{PUSCH,s} - \lfloor N_{symb}^{PUSCH,s}/2 \rfloor$. A start location $RB_{start}$ of a frequency domain resource of the PUSCH satisfies:

$$RB_{start} = \begin{cases} RB_{start} & i = 0 \\ (RB_{start} + RB_{offset}) mod N_{BWP}^{size} & i = 1 \end{cases}$$

where

$N_{BWP}^{Size}$ is a quantity of RBs included in a BWP, and $RB_{offset}$ is an offset between a frequency domain start location of the $n^{th}$ hop of the PUSCH and a frequency domain start location of the $(n+1)^{th}$ hop of the PUSCH. $RB_{offset}$ may be indicated by the network device.

FIG. 12 is a diagram of PUSCH repetition Type A transmission with inter-slot frequency hopping. In FIG. 12, a slot 0 is used for a first PUSCH transmission, and a slot 1 is used for a second PUSCH transmission. A start location $RB_{start}$ of a frequency domain resource of a PUSCH transmitted in a slot $n_s^{\mu}$ satisfies:

$$RB_{start}(n_s^{\mu}) = \begin{cases} RB_{start} & n_s^{\mu} mod 2 = 0 \\ (RB_{start} + RB_{offset}) mod N_{BWP}^{size} & n_s^{\mu} mod 2 = 1 \end{cases}$$

where

$N_{BWP}^{Size}$ is a quantity of RBs included in a BWP, and $RB_{offset}$ is an offset between a frequency domain start location of the PUSCH in an $n^{th}$ slot and a frequency domain start location of the PUSCH in an $(n+1)^{th}$ slot. $RB_{offset}$ may be indicated by the network device.

PUSCH repetition Type B transmission with frequency hopping includes transmission with inter-slot frequency hopping and transmission with inter-repetition (inter-repetition) frequency hopping. The inter-repetition frequency hopping essentially means that PUSCHs in different repetitions are transmitted through frequency hopping. An indication of a resource for PUSCH repetition Type B transmission with inter-slot frequency hopping is similar to an indication of a resource for the PUSCH repetition Type A transmission with inter-slot frequency hopping. For details, refer to the indication of the resource for the PUSCH repetition Type B transmission with inter-slot frequency hopping. Details are not described herein again.

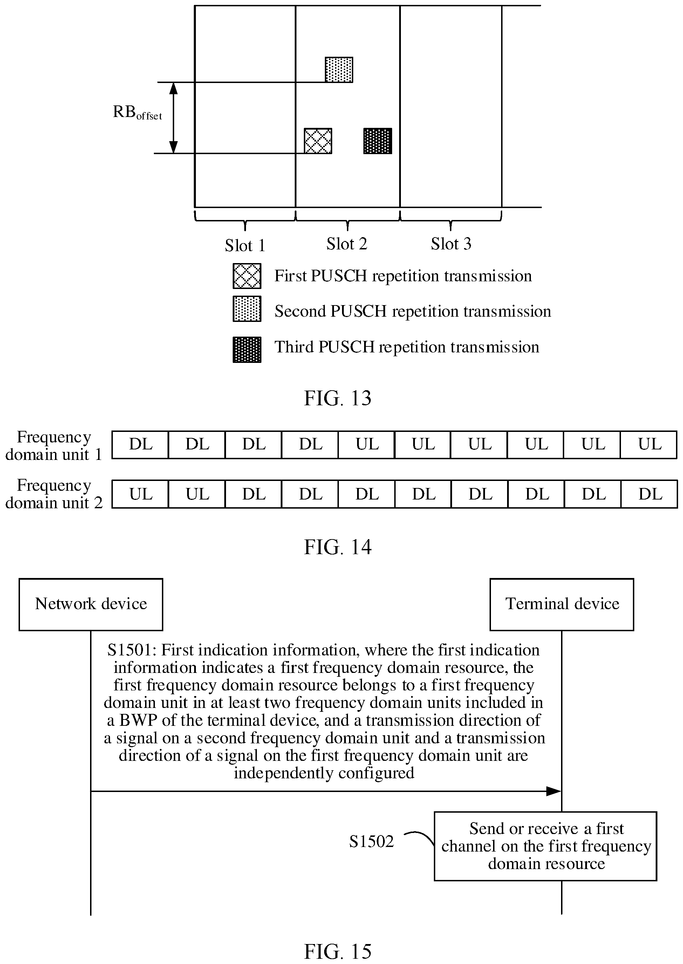

FIG. 13 is a diagram of PUSCH repetition Type B transmission with inter-repetition frequency hopping. In FIG.

13, an example in which a quantity of PUSCH repetitions is 3 is used. A start location $RB_{start}$ of a frequency domain resource for an $n^{th}$ PUSCH repetition transmission satisfies:

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}'$$

*where*

$N_{BWP}^{Size}$ is a quantity of RBs included in a BWP, and $RB_{offset}$ is an offset between a frequency domain start location of a PUSCH in a first repetition and a frequency domain start location of a PUSCH in a second repetition. $RB_{offset}$ may be indicated by the network device.

It may be understood that a larger BWP indicates more candidate values of $RB_{offset}$, that is, indicates that $RB_{offset}$ is more flexibly configured. For example, if the quantity of RBs included in the BWP is greater than or equal to 50, $RB_{offset}$ may be a target value determined from four candidate values configured by a higher layer. On the contrary, if the quantity of RBs included in the BWP is less than 50, $RB_{offset}$ is a target value determined from two candidate values configured by a higher layer.

In the scenario 4, similar to that in the scenario 3, only a part of frequency domain resources in the entire BWP can be used to transmit the PUSCH, and if the current resource indication is still used to indicate a resource to the terminal device, a conflict may be caused. For example, it is assumed that the BWP includes 100 RBs, and the 100 RBs are an RB 0 to an RB 99. The RB 0 to an RB 49 are used for uplink transmission, and an RB 50 to the RB 99 are used for downlink transmission. The current resource indication is still used, a start RB index for scheduling the PUSCH is 10, and $RB_{offset}$ is 50. In this case, an index of a $1^{st}$ RB of a PUSCH obtained through frequency hopping is 60. However, an RB 60 is a resource used to transmit downlink information. Therefore, a conflict is caused, and a PUSCH corresponding to the RB 60 may be canceled. It can be learned that the current PUSCH frequency hopping resource indication manner is not applicable to the scenario shown in FIG. 1.

Scenario 5: CSI-RS resource indication.

The terminal device measures a CSI-RS sent by the network device, to obtain CSI, and feeds back the obtained CSI to the network device. Feedback of the CSI supports wideband feedback and narrowband feedback. The wideband feedback means that only one value is fed back in an entire reporting bandwidth, and the narrowband feedback means that feedback is performed in each subband (subband) included in an entire reporting bandwidth. As shown in Table 2, a size of each subband is specified in a protocol. It may be understood that, for a fixed BWP, a quantity of PRBs included in each subband is fixed. As shown in Table 2, one BWP includes 50 PRBs, and a size of a subband of the BWP is 4 or 8. Whether the size of the subband is 4 or 8 may be indicated using higher layer signaling. It may be understood that, similar to that in the PDSCH or PUSCH resource indication, a quantity of PRBs included in a $1^{st}$ subband and a quantity of RPBs included in a last subband are related to a start RB of the BWP. For example, the quantity of PRBs included in the $1^{st}$ subband satisfies: $N_{PRB}^{SB} - N_{BWP,,i}^{start} \bmod N_{PRB}^{SB}$, where $N_{PRB}^{SB}$ is a quantity of RPBs included in a subband other than the $1^{st}$ subband and the last subband (that is, the size of the subband determined using Table 2), and $N_{BWP,,i}^{start}$ is the start RB of the BWP. The quantity of PRBs included in the last subband satisfies:

If $( N_{BWP,i}^{start} + N_{BWP,,i}^{size} ) \bmod N_{PRB}^{SB} \neq 0$, the quantity of PRBs is $( N_{BWP,,i}^{start} + N_{BWP,,i}^{size}) \bmod N_{PRB}^{SB}$, where $N_{BWP,,i}^{size}$ is a quantity of RBs included in the BWP.

If $(N_{BWP,,i}^{start} + N_{BWP,,i}^{size}) \bmod N_{PRB}^{SB} = 0$, the quantity of PRBs included in the last subband is the same as the quantity of PRBs included in the subband other than the $1^{st}$ subband and the last subband.

**Table 2**

| BWP | Size of a subband |
|---|---|
| <24 | N/A |
| 24 to 72 | 4, or 8 |
| 73 to 144 | 8, or 16 |

(continued)

| BWP | Size of a subband |
| --- | --- |
| 145 to 275 | 16, or 32 |

In the scenario 5, the size of the subband is related to the size of the BWP. When the BWP includes a plurality of frequency domain units whose transmission directions are independently configured, and the plurality of frequency domain units included in the BWP include a frequency domain unit whose transmission direction is uplink transmission and a frequency domain unit whose transmission direction is downlink transmission, only a part of frequency domain resources in the BWP can be used for downlink transmission, and if the current resource indication in the feedback of the CSI is still used to indicate a resource to the terminal device, a conflict may be caused. In addition, a smaller size of the subband indicates a smaller granularity of the CSI obtained by the network device. This is more flexible, but overheads of the resource indication are higher. Currently, an associated subband in the feedback of the CSI is related to the size of the BWP, and balance between the overheads of the resource indication and flexibility is poor.

It can be learned from the foregoing descriptions of the scenario 1 to the scenario 5 that, when a BWP includes a plurality of frequency domain units whose transmission directions are independently configured, a current resource configuration or resource indication method may cause a resource conflict. In view of this, a resource indication method according to an embodiment of this application is provided, to avoid the resource conflict.

The technical solutions provided in this embodiment of this application are described below in detail with reference to the accompanying drawings.

In the following descriptions, transmission directions of different frequency domain units in a BWP are independently configured. Optionally, on a same time domain resource, configured transmission directions of different frequency domain units are opposite. As shown in FIG. 2, in any time unit, transmission directions of a frequency domain resource 1 and a frequency domain resource 2 are opposite. This configuration may also be referred to as a complementary frame structure. Optionally, on a part of time domain resources in a same time period, configured transmission directions of different frequency domain units are the same, and on the other part of time domain resources, configured transmission directions of different frequency domain units are opposite. As shown in FIG. 14, in a part of time units, configured transmission directions of a frequency domain unit 1 and a frequency domain unit 2 are the same, and in the other part of time units, configured transmission directions of a frequency domain unit 1 and a frequency domain unit 2 are opposite.

It should be noted that a size of each frequency domain unit included in the BWP is not limited in this embodiment of this application. In addition, in the following descriptions, information may be data, or may be a channel. An index of an RB in this specification may be a CRB index of the RB, or may be an index of a PRB. The index of the PRB is described relative to a $1^{st}$ RB of the BWP. In other words, an index of a PRB of the $1^{st}$ RB of the BWP is 0. In the following descriptions, an index of a $1^{st}$ RB to an index of a last RB are sorted in ascending order. Similarly, an index of a $1^{st}$ PRB to an index of a last PRB are sorted in ascending order, and an index of a $1^{st}$ RBG to an index of a last RBG are sorted in ascending order. It may be understood that, in this embodiment, if an RB is used as a unit, an interval between RBs is equal to a difference between indexes of the RBs.

FIG. 15 is a schematic flowchart of a resource indication method according to an embodiment of this application. In the following description process, an example in which the resource indication method according to this embodiment of this application is applied to the network architecture shown in FIG. 1 is used. In addition, the method may be performed by two communication apparatuses. The two communication apparatuses are, for example, a first communication apparatus and a second communication apparatus. The first communication apparatus may be a terminal device or a communication apparatus that can support a terminal device in implementing a function needed in the method, or certainly may be another communication apparatus, for example, a chip system. The second communication apparatus may be a network device or a communication apparatus that can support a network device in implementing a function needed in the method, or certainly may be another communication apparatus, for example, a chip system. Implementations of the first communication apparatus and the second communication apparatus are not limited. For example, the first communication apparatus may be the terminal device, and the second communication apparatus is the network device; or the first communication apparatus is the communication apparatus that can support the terminal device in implementing the function needed in the method, and the second communication apparatus is the network device, and so on.

In the following descriptions, an example in which a communication method according to this embodiment of this application is performed by the terminal device and the network device is used, in other words, an example in which the first communication apparatus is the terminal device and the second communication apparatus is the network device is used. If this embodiment is applied to the network architecture shown in FIG. 1, the terminal device described below may be the terminal device in the network architecture shown in FIG. 1, and the network device described below may be the network device in the network architecture shown in FIG. 1. It should be noted that this embodiment of this application merely uses the example in which the method is performed by the terminal device and the network device, and the method is not limited to being performed by the terminal device.

S1501: The network device sends first indication information to the terminal device, and correspondingly, the terminal device receives the first indication information from the network device, where the first indication information indicates a first frequency domain resource. The first frequency domain resource belongs to a first frequency domain unit included in a BWP, and the BWP further includes a second frequency domain unit.

S1502: The terminal device sends or receives a first channel on the first frequency domain resource.

Specifically, the BWP may include S frequency domain units, where S is greater than or equal to 2. Transmission directions of signals on the S frequency domain units may be independently configured. The independent configuration means that the network device separately configures the transmission directions of the signals on the S frequency domain units. For example, the network device may configure, by using indication information that is in one-to-one correspondence with a plurality of frequency domain units, transmission directions of signals on the plurality of frequency domain units. For example, the S frequency domain units include the first frequency domain unit and the second frequency domain unit, a transmission direction of a signal on the first frequency domain unit may be indicated by second indication information, and a transmission direction of a signal on the second frequency domain unit may be indicated by third indication information. The second indication information and the third indication information may be different indication information, or may be same indication information. When the second indication information is the same as the third indication information, the network device simultaneously indicates transmission directions of signals on two frequency domain units by using one piece of indication information. In addition, the transmission directions of the signals on the S frequency domain units may be the same, or may be different. That is, the network device independently configures the transmission directions of the signals on the S frequency domain units, and the configured transmission directions of the signals on the S frequency domain units may be all the same, or may be partially the same. For example, the second indication information indicates that the transmission direction of the signal on the first frequency domain unit is an uplink transmission direction or a downlink transmission direction, and the third indication information indicates that the transmission direction of the signal on the second frequency domain unit is a downlink transmission direction or an uplink transmission direction.

Because the transmission directions of the signals on the plurality of frequency domain units included in the BWP may be independently configured, in a same time unit, transmission directions of signals on the plurality of frequency domain units included in the BWP may include both an uplink transmission direction and a downlink transmission direction. In this case, if the current resource indication manner is still used, a resource conflict may be caused. To avoid the resource conflict, in this embodiment of this application, the network device may indicate, based on a transmission direction of a channel to be sent or to be received, a frequency domain unit to which a frequency domain resource used to transmit the channel belongs. For ease of descriptions, the following uses an example in which the channel to be sent or to be received by the network device is the first channel, a frequency domain resource used to transmit the first channel is the first frequency domain resource, and the first frequency domain resource belongs to the first frequency domain unit. It should be noted that, that the terminal device sends or receives a first channel on the first frequency domain resource may be that the terminal device sends or receives the first channel on all of resources of the first frequency domain resource, or may be that the terminal device sends or receives the first channel on a part of resources of the first frequency domain resource. That is, the first channel may be carried on a part or all of resources of the first frequency domain resource. For example, the first frequency domain resource includes 10 RBs, and the first channel may be carried using six RBs of the 10 RBs, or the first channel may be carried using the 10 RBs.

For different application scenarios, technical solutions in which the network device indicates the first frequency domain resource to the terminal device are also different. The following uses the foregoing five scenarios as examples, to separately describe how the network device indicates the first frequency domain resource to the terminal device in various scenarios.

Scenario 1: The first channel is a PDCCH, in other words, the first channel is transmitted in a downlink direction. When a BWP includes a plurality of frequency domain units, the network device may determine, from the plurality of frequency domain units, a first frequency domain unit whose transmission direction is consistent with a transmission direction of the first channel, to send the PDCCH. For example, the network device may send the PDCCH by using a first frequency domain resource in the first frequency domain unit. For example, the first frequency domain unit includes N resource block groups, and the first frequency domain resource may include a part or all of the N resource block groups, where N is a positive integer greater than or equal to 1.

The first frequency domain resource is used to determine, based on a start RB index of the first frequency domain unit, an RB index of a 1st RB included in a 1st resource block group. Because signals on the first frequency domain unit have only one transmission direction at the same time, the network device configures, for the terminal device based on the start RB index of the first frequency domain unit, a frequency domain resource used to receive the PDCCH, to avoid configuring, for the terminal device, a resource that cannot be used to transmit the PDCCH, that is, to avoid a resource conflict.

An index of a 1st RB in a 1st resource block group of the N resource block groups varies depending on whether the network device configures indication information of an RB offset. If the network device does not configure the indication information of the RB offset, the index of the 1st RB in the 1st resource block group of the N resource block groups may be $\text{n} \times \lceil N1/\text{n} \rceil$, where N1 is an RB index of the first frequency domain unit, n is a quantity of resource blocks included in the resource block group, and n is a positive integer. If the network device configures the indication information of the RB offset, the index of the 1st RB in the 1st resource block group of the N resource block groups may be determined based on the start RB index of the first frequency domain unit and the RB offset configured by the network device. For example, the terminal device receives indication information from the network device, the indication information indicates a first offset value, and the index of the 1st RB in the 1st resource block group of the N resource block groups is $N1 + N_{\text{RB}}^{\text{offset}}$, where N1 is the start RB index of the first frequency domain unit, and $N_{\text{RB}}^{\text{offset}}$ is the first offset value.

In this embodiment of this application, if the network device does not configure the indication information of rb-Offset, the RB index of the 1st RB in the 1st resource block group of the N resource block groups may be $\text{n} \times \lceil N1/\text{n} \rceil$, where N1 is the start RB index of the first frequency domain unit, n is the quantity of resource blocks included in the resource block group, and n is the positive integer. The example in FIG. 4 is still used. It is assumed that n=6, and N1 is a start RB index of a frequency domain unit 2, that is, 41. In this case, an index of a 1st RB included in a 1st PRB group of N PRB groups may be $6 \times \lceil 41/6 \rceil = 42$, which belongs to the frequency domain unit 2. That is, the frequency domain unit 2 is a resource used for downlink transmission. It can be learned that the RB index of the 1st RB in the 1st PRB group included in the N PRB groups is determined based on the start RB index of the frequency domain unit, so that it can be ensured that all the N PRB groups can be used to transmit the PDCCH.

The network device determines, in the N resource block groups, a resource block group, that is, the first frequency domain resource, used to send the first channel, and may indicate the first frequency domain resource to the terminal device. For example, the network device may indicate the first frequency domain resource by using first indication information. For example, the first indication information may be the foregoing information element "frequency domain resource (frequencyDomainResource)", and indicates the N resource block groups included in the first frequency domain unit. For example, the first indication information includes a first bitmap, and the first bitmap includes N bits. A resource block group corresponding to a bit whose value is a first value in the first bitmap cannot be used to transmit the PDCCH, and correspondingly, a resource block group corresponding to a bit whose value is a second value can be used to transmit the PDCCH. It may be understood that, when the first value is 0, the second value is 1; or when the first value is 1, the second value is 0. For ease of descriptions, in this specification, an example in which the first value is 0 and the second value is 1 is used.

It may be understood that the N bits indicate the N resource block groups in ascending order of indexes of the resource block groups. An order of the indexes of the resource block groups is consistent with an order of indexes of RBs. For example, the order of the indexes of the RBs is an ascending order of the indexes, and the indexes of the RBs included in the resource block groups with ascending indexes are also ascending. It should be noted that, in this embodiment of this application, the plurality of frequency domain units included in the BWP may each correspond to one piece of indication information (for example, a bitmap indicating a PDCCH resource), or it may be considered that the plurality of frequency domain units are separately configured using different indication information. For example, the BWP includes a frequency domain unit 1 and a frequency domain unit 2. The frequency domain unit 1 may be configured using indication information 1, and the frequency domain unit 2 may be configured using indication information 2. For another example, the first indication information is used to configure the first frequency domain unit.

It is considered that RBs included in one resource block group (for example, a resource block group A) may be from two frequency domain units. For example, the resource block group A includes a first RB set and a second RB set, but the first RB set belongs to the frequency domain unit 1, and the second RB set belongs to the frequency domain unit 2. If the frequency domain unit 1 is adjacent to the frequency domain unit 2, because transmission directions of the frequency domain unit 1 and the frequency domain unit 2 are independently configured, and if the resource block A is used to transmit the PDCCH, and a transmission direction of a signal on the frequency domain unit 1 and a transmission direction of a signal on the frequency domain unit 2 are opposite, a resource conflict is caused. To avoid the resource conflict, this embodiment of this application provides the following optional manners. Manner 1: When configuring a resource of the PDCCH, the network device avoids the resource block group A, in other words, the first frequency domain resource does not include the resource block group A. Manner 2: If the first frequency domain resource includes one or more RBs in the resource block group A, in this embodiment of this application, it may be predefined or preconfigured or the network device indicates whether the resource block group A can be used for downlink transmission.

It is considered that RBs included in one resource block group (for example, a resource block group A) may be from two frequency domain units. For example, the resource block group A includes a first RB set and a second RB set, but the first RB set belongs to the frequency domain unit 1, and the second RB set belongs to the frequency domain unit 2. If the frequency domain unit 1 is adjacent to the frequency domain unit 2, and transmission directions of signals on the two adjacent frequency domain units are different, and clearly, if the resource block A is used to transmit the PDCCH, a resource conflict is caused. To avoid the resource conflict, any one of the following conditions may be satisfied. In this embodiment of this application, it may be predefined or preconfigured or the network device indicates that the resource block group A cannot be used for downlink transmission, for example, the resource block group A cannot be used to transmit the PDCCH. For example, the network device may indicate, by using fourth indication information, that the resource block group A cannot be used for downlink transmission. When the fourth indication information indicates that the resource block group A cannot be used for downlink transmission, and the first channel is transmitted in a downlink direction, the resource block group A cannot be used to transmit the first channel.

Condition 1: RBs included in the resource block group A are from two frequency domain units. For the terminal device, the terminal device determines that the RBs included in the resource block group A are from the two frequency domain units, and may not receive the PDCCH on the resource block group A by default.

Condition 2: RBs included in the resource block group A are from two frequency domain units, and transmission directions of signals on the two frequency domain units are opposite. In comparison with the condition 1, in the condition 2, whether the transmission directions of the signals on the two frequency domain units are opposite is further determined. When the transmission directions are opposite, the resource block group A cannot be used to transmit the PDCCH. However, if the RBs included in the resource block group A are from the two frequency domain units, when the transmission directions of the signals on the two frequency domain units are the same, the resource block group A may still be configured to transmit the PDCCH, to improve resource utilization. Optionally, when the transmission directions of the signals on the two frequency domain units are the same and are downlink transmission, the resource block group A may still be configured to transmit the PDCCH, to improve resource utilization. That is, the RBs included in the resource block group A are from the two frequency domain units, and the transmission directions of the signals on the two frequency domain units are the same. In this case, if the resource block group A is preconfigured or indicated to be used to transmit the PDCCH, regardless of whether the first frequency domain resource configured by the network device for the terminal device includes the first RB set included in the resource block group A, the terminal device may receive the PDCCH on a part or all of resources of the first frequency domain resource.

Condition 3: RBs included in the resource block group A are from two frequency domain units, and transmission directions of signals on the two frequency domain units are opposite in a same time unit. For example, a frequency domain resource corresponding to a first time domain resource includes a first frequency domain unit and a second frequency domain unit, the resource block group A includes a first RB set in the first frequency domain unit and a second RB set in the second frequency domain unit, and in a first time unit, a transmission direction of a signal on the first frequency domain unit and a transmission direction of a signal on the second frequency domain unit are opposite. In this case, it may be predefined or preconfigured or the network device indicates that the resource block group A cannot be used to transmit the PDCCH. However, if the transmission direction of the signal on the first frequency domain unit in the first time unit is opposite to a transmission direction of a signal on the second frequency domain unit in a second time unit, the PDCCH may be transmitted on the resource block group A in a time division manner, to improve resource utilization.

When any one of the condition 1 to the condition 3 is satisfied, the network device may directly indicate that the resource block group A cannot be used to transmit the PDCCH. For example, the network device may configure, as a first value (that is, 0), a bit corresponding to the resource block group A. The terminal device determines, based on the value of the bit corresponding to the resource block group A, not to receive the PDCCH on the resource block group A. Alternatively, the network device determines that the condition 1 is satisfied, and indicates, by default, that the resource block group A may be used to transmit the PDCCH, in other words, configures, as a second value (that is, 1), a bit corresponding to the resource block group A. For the terminal device, even if the network device configures, as the second value (that is, 1), the bit corresponding to the resource block group A, the terminal device may determine whether the condition 2 or the condition 3 is satisfied, to determine, based on a determining result, whether to receive the PDCCH on the resource block group A. For example, if the terminal device determines that the condition 2 or the condition 3 is satisfied, the terminal device determines that the resource block group A cannot be used to transmit the PDCCH, and does not receive the PDCCH on the resource block group A.

It should be noted that, that the terminal device does not receive the PDCCH on the resource block group A includes that the terminal device does not receive the PDCCH on the first RB set and the second RB set that are included in the resource block group A, or the terminal device does not receive the PDCCH on the first RB set included in the resource block group A. For example, the first frequency domain resource indicated by the network device to the terminal device does not include the first RB set included in the resource block group A. In this case, the terminal device receives the PDCCH on a part or all of resources of the first frequency domain resource. For example, the first frequency domain resource includes 10 RBs, the 10 RBs do not include the first RB set included in the resource block group A, and the PDCCH may be carried using a part or all of the 10 RBs. For another example, the first frequency domain resource indicated by the network device to the terminal device includes the first RB set included in the resource block group A. In this case, the terminal device receives the PDCCH on a resource in the first frequency domain resource other than the first RB set. The terminal device may receive the PDCCH on a part or all of remaining resources of the first frequency domain resource other than the first RB set. For example, the first frequency domain resource includes 10 RBs, the first RB set includes five RBs, and the PDCCH may be carried using a part or all of remaining five RBs of the 10 RBs other than the five RBs included in the first RB set.

In addition, the foregoing uses an example in which the resource block group A cannot be used for downlink transmission. It may be understood that, when any one of the condition 1 to the condition 3 is satisfied, the resource block group A cannot be used for uplink transmission. For example, the network device may indicate, by using fourth indication information, that the resource block group A cannot be used for uplink transmission. When the fourth indication information indicates that the resource block group A cannot be used for uplink transmission, and the first channel is transmitted in an uplink direction, the resource block group A cannot be used to transmit the first channel.

Scenario 2: The first channel is a PUCCH, in other words, the first channel is transmitted in an uplink direction. For a case in which a BWP includes a plurality of frequency domain units, in this embodiment of this application, a PUCCH resource may be indicated to the terminal device in the following three resource indication manners.

Indication manner 1: When the BWP includes at least two frequency domain units, the network device may configure a corresponding PUCCH resource set for each frequency domain unit. That is, a PUCCH resource set is independently configured for each frequency domain unit. For example, the network device may configure at least one PUCCH resource set for each frequency domain unit, and PUCCH resource sets configured for different frequency domain units may be the same, or may be different. The network device may indicate, by using signaling, a specific PUCCH resource set or specific PUCCH resource sets to be used by the terminal device. For example, at least one PUCCH resource set is configured for a frequency domain unit 1, and at least one PUCCH resource set is configured for a frequency domain unit 2. The PUCCH is transmitted on the frequency domain unit 1, and the network device may indicate, by using signaling, the terminal device to use the at least one PUCCH resource set corresponding to the frequency domain unit 1. Optionally, the terminal device may determine, based on a frequency domain unit on which the PUCCH is transmitted and from a PUCCH resource set corresponding to the frequency domain unit, a resource for transmitting the PUCCH. For example, the PUCCH is transmitted on a first frequency domain unit. In this case, a resource used for the PUCCH is selected from a PUCCH resource set corresponding to the first frequency domain unit. Because a PUCCH resource set corresponding to each frequency domain unit is independently configured, transmission of the PUCCH on different frequency domain units is more flexible.

A PUCCH resource set associated with each frequency domain unit may include a plurality of PUCCH resources. For example, a PUCCH resource set associated with each frequency domain unit includes eight PUCCH resources. The network device may further indicate the terminal device to use a specific PUCCH resource or specific PUCCH resources in a target resource set to send the PUCCH. When determining a target PUCCH resource from the target resource set based on an indication of the network device, the terminal device may further flexibly select a proper PUCCH resource from the target resource set based on a specific channel condition, reliability, and the like. It may be understood that the target resource set belongs to at least one PUCCH resource set corresponding to a frequency domain unit in which the PUCCH is located. For how the terminal device determines the target resource set, refer to related content in the foregoing scenario 2. Details are not described herein again.

Indication manner 2: When the BWP includes at least two frequency domain units, the network device may configure one or more PUCCH resource sets for the terminal device. In other words, the at least two frequency domain units jointly correspond to the one or more PUCCH resource sets configured by the network device. In this case, in this embodiment of this application, a PUCCH resource may be configured based on a $1^{st}$ RB included in a frequency domain unit on which the PUCCH is transmitted. In other words, a resource indication of the PUCCH is described relative to the frequency domain unit on which the PUCCH is transmitted. For example, an index (RB index) of a frequency domain resource in the PUCCH resource is described relative to the $1^{st}$ RB included in the frequency domain unit in which the PUCCH is located. For example, if the PUCCH is transmitted on a first frequency domain unit, a $1^{st}$ RB included in the first frequency domain unit is used as a reference for the RB index in the PUCCH resource configured by the network device for the terminal device. For example, the RB index equal to 0 indicates the $1^{st}$ RB included in the first frequency domain unit. It may be understood that the $1^{st}$ RB included in the first frequency domain unit is an RB with a smallest RB index in the first frequency domain unit. If the PUCCH is transmitted on a second frequency domain unit, a $1^{st}$ RB included in the second frequency domain unit is used as a reference for the RB index in the PUCCH resource configured by the network device for the terminal device. For example, the RB index equal to 0 indicates the $1^{st}$ RB included in the second frequency domain unit. It may be understood that the $1^{st}$ RB included in the first frequency domain unit is an RB with a smallest RB index in the first frequency domain unit. In the indication manner 2, when PUCCHs are transmitted on different frequency domain units, although PUCCH resources are selected from one configured PUCCH resource set, in this embodiment of this application, a frequency domain location of a PUCCH resource in a PUCCH resource set on each frequency domain unit is determined based on a frequency domain unit for transmitting the PUCCH. This is different from a conventional technology in which a configuration parameter, namely, an RB index that is of a frequency domain location of a PUCCH resource and that equals to 0 indicates a 1st RB of the BWP, and is more flexible. It may be understood that the 1st RB of the BWP is an RB with a smallest RB index in the BWP.

Particularly, when the terminal device sends the PUCCH in a frequency hopping manner, a start location of a frequency domain resource of a second hop of the PUCCH may also be indicated in the indication manner 2. In other words, an RB index of the start location of the frequency domain resource of the second hop of the PUCCH is described relative to the 1st RB included in the frequency domain unit in which the PUCCH is located.

Indication manner 3: The network device may configure a PUCCH resource set based on a time unit. For example, one or more PUCCH resource sets may be configured for one frequency domain unit, and PUCCH resource sets configured for different frequency domain units may be the same, or may be different. There is a correspondence between a time unit and at least one PUCCH resource set on each frequency domain unit. For example, different PUCCH resource sets may be configured for different time units. In comparison with a conventional technology in which a same PUCCH resource set is configured for different time units, this may be adaptively adjusted based on change of the frequency domain unit for transmitting the PUCCH, and is more flexible.

In an example, the network device may configure a correspondence between at least one PUCCH resource set and a plurality of time units by using fifth indication information. For example, the network device sends the fifth indication information to the terminal device, and the fifth indication information indicates a correspondence between N resource sets and M time units. When sending the PUCCH, the terminal device may determine a target resource set from the at least one PUCCH resource set based on a time unit in which the PUCCH is located and the correspondence, and then select a PUCCH resource from the target resource set. It may be understood that the first frequency domain resource belongs to one or more target resource sets of the N resource sets, and the one or more target resource sets correspond to a time unit occupied by the first channel.

Optionally, a PUCCH resource set corresponding to each time unit may be indicated using a bitmap whose length is P bits, where P is a quantity of time units. Optionally, P is a quantity of time units included in one cycle. Correspondingly, the bitmap whose length is P bits repeatedly indicates, based on a cycle P, PUCCH resource sets corresponding to time units included in a plurality of cycles. The PUCCH resource set takes effect in a time unit corresponding to a bit whose value is a first value in the bitmap. Correspondingly, the PUCCH resource set does not take effect in a time unit corresponding to a bit whose value is a second value in the bitmap. It may be understood that, when the first value is 0, the second value is 1; or when the first value is 1, the second value is 0. For ease of descriptions, in this embodiment of this application, an example in which the first value is 1 and the second value is 0 is used. The terminal device may determine a pattern (pattern) of the PUCCH resource set based on the bitmap, to determine a time unit in which the PUCCH resource set takes effect. For example, the network device configures two PUCCH resource sets for the terminal device: a PUCCH resource set 1 and a PUCCH resource set 2. For the PUCCH resource set, the network device may indicate, by using the bitmap, that a pattern of the PUCCH resource set 1 is 010010. In other words, the PUCCH resource set 1 does not take effect in a first time unit, and takes effect in a second time unit.

Optionally, when a plurality of effective PUCCH resource sets take effect in a same time unit, the network device may further indicate, by using signaling, one of the plurality of effective PUCCH resource sets, for the terminal device to determine the target resource set. For example, the target resource set is a PUCCH resource set indicated by the network device. The foregoing example is still used. To be specific, the network device configures the PUCCH resource set 1 and the PUCCH resource set 2 for the terminal device, the pattern of the PUCCH resource set 1 is 010010, and the pattern of the PUCCH resource set 2 is 000010. It can be learned that both the PUCCH resource set 1 and the PUCCH resource set 2 take effect in a sixth time unit. In this case, the network device may indicate the PUCCH resource set 1 or the PUCCH resource set 2, and the terminal device may determine, based on an indication of the network device, that the target resource set includes the PUCCH resource set 1 or the PUCCH resource set 2.

Scenario 3: The first channel is a PDSCH or a PUSCH. When a BWP includes a plurality of frequency domain units, the network device may determine, from the plurality of frequency domain units, a first frequency domain unit whose transmission direction is consistent with a transmission direction of the first channel, and determine the first frequency domain resource from the first frequency domain unit. For example, the first frequency domain unit includes N resource block groups. It should be understood that the first frequency domain resource includes a part or all of the N resource block groups. In this embodiment of this application, a quantity of RBs included in a resource block group is related to a quantity of RBs included in a frequency domain unit. In comparison with a conventional technology in which a quantity of RBs included in a resource block group of a frequency domain resource used to transmit the PDSCH or the PUSCH is related to RBs included in the BWP, a resource conflict can be avoided, to be specific, configuring, for the terminal device, a resource that cannot be used to transmit the PDSCH or the PUSCH is avoided.

PDSCH frequency domain resource indication is similar to PUSCH frequency domain resource indication. The following uses a PDSCH as an example to describe PDSCH resource indication according to an embodiment of this application. For the PUSCH resource indication, refer to a PDSCH resource indication method. The PDSCH frequency domain resource indication includes two indication manners, which may be, for example, referred to as Type 0 and Type 1. Specific names of the two indication manners are not limited in this embodiment of this application.

A Type 0 indication indicates one or more resource block groups occupied by the PDSCH. In this embodiment of this application, a quantity of RBs included in one resource block group is related to a size of a frequency domain unit. Particularly, a quantity of RBs included in a 1st resource block group and/or a quantity of RBs included in a last resource block group are/is related to the size of the frequency domain unit and a start RB index corresponding to the frequency domain unit. A first frequency domain unit is used as an example. The first frequency domain unit includes N resource block groups, and a 1st resource block group of the N resource block groups includes Y RBs, where Y is related to a start RB index of the first frequency domain unit and a quantity of RBs included in the first frequency domain unit. Further, a last resource block group of the N resource block groups includes Z RBs, where Z is related to the start RB index of the first frequency domain unit and the quantity of RBs included in the first frequency domain unit. A resource block group other than the first resource block group and the last resource block group that are in the N resource block groups includes X RBs, where X is related to the start RB index of the first frequency domain unit and the quantity of RBs included in the first frequency domain unit.

A quantity of resource block groups included in a frequency domain unit is related to a quantity of RBs included in the frequency domain unit. An example in which the resource block group is an RBG is used. A quantity of RBGs included in the first frequency domain unit is: $N_{RBG} = \left\lceil \left( N_{sub,i}^{size} + \left( N_{sub,i}^{start} \bmod P \right) \right) / P \right\rceil$, where P is a quantity of RBs included in any RBG between a 1st RBG and a last RBG, $N_{sub,i}^{start}$ is the start RB index of the first frequency domain unit, and $N_{sub,i}^{size}$ is the quantity of RBs included in the first frequency domain unit. Optionally, P is related to the quantity of RBs included in the first frequency domain unit.

A quantity of RBs included in the 1st RBG is: $RBG_0^{size} = P - N_{sub,i}^{start} \bmod P$. It is assumed that a size of the first frequency domain unit is 50, a size of the RBG is 8, and the start RB index of the first frequency domain unit is 21. In this case, $RBG_0^{size} = 8 - 21 \bmod(8) = 5$.

A quantity $RBG_{last}^{size}$ of RBs included in the last RBG satisfies the following rule:

If $\left( N_{sub,i}^{start} + N_{sub,i}^{size} \right) \bmod P$ is greater than 0, $RBG_{last}^{size} = \left( N_{sub,i}^{start} + N_{sub,i}^{size} \right) \bmod P$; or

if $\left( N_{sub,i}^{start} + N_{sub,i}^{size} \right) \bmod P$ is less than or equal to 0, $RBG_{last}^{size} = P$.

For example, the first frequency domain unit includes N RBGs, first indication information includes a second bitmap, and one bit in the second bitmap corresponds to one RBG. That is, the second bitmap is information whose length is N bits. An RBG corresponding to a bit whose value is a first value in the second bitmap cannot be used to transmit the PDSCH, and correspondingly, an RBG corresponding to a bit whose value is a second value can be used to transmit the PDSCH. It may be understood that, when the first value is 0, the second value is 1; or when the first value is 1, the second value is 0. For ease of descriptions, in this specification, an example in which the first value is 0 and the second value is 1 is used.

In comparison with the Type 0 indication, a Type 1 indication indicates a frequency domain resource of the PDSCH by indicating RB_start and L_RBs. For example, indication information for scheduling the PDSCH may include RB_start and L_RBs. In this embodiment of this application, RB_start is an interval between a start RB of a frequency domain resource and a 1st RB of a frequency domain unit (that is, the first frequency domain unit) in which the PDSCH is located, and L_RBs is a quantity of RBs contiguously occupied by the frequency domain resource.

Alternatively, the frequency domain resource of the PDSCH may be indicated using an RIV. For example, the indication information for scheduling the PDSCH may include the RIV In this embodiment of this application, the RIV is related to a first index and the quantity of RBs included in the first frequency domain unit, the first index is related to the start RB index of the first frequency domain unit and an index of a 1st RB of the BWP, and an index of the 1st RB of the first frequency domain unit is 0.

For example, the RIV, RB_start, and L_RBs satisfy the following formula:

$$RIV = N_{sub}^{size}(L_{RBs} - 1) + RB_{start},$$

where $(L_{\text{RBs}} - 1) \leq \lfloor N_{sub}^{size}/2 \rfloor$ ; or

$$RIV = N_{sub}^{size}\left(N_{sub}^{size} - L_{\text{RBs}} + 1\right) + \left(N_{sub}^{size} - 1 - \text{RB}_{\text{start}}\right),$$

where $N_{sub}^{size}$ is the size of the first frequency domain unit.

For example, the RIV, RBG$_{\text{start}}$, and L$_{\text{RBGs}}$ satisfy the following formula:

$$RIV = N_{RBG}(L_{\text{RBGs}} - 1) + \text{RBG}_{\text{start}} ,$$

where $(L_{\text{RBGs}} - 1) \leq \lfloor N_{RBG}/2 \rfloor$ ; or $RIV = N_{RBG}(N_{RBG} - L_{\text{RBGs}} + 1) + (N_{RBG} - 1 - \text{RBG}_{\text{start}})$. $N_{RBG}$ is the quantity of RBGs included in the first frequency domain unit.

Optionally, the indication information for scheduling the PDSCH is carried in a DCI format 1_2. Correspondingly, the indication information for scheduling the PUSCH is carried in a DCI format 0_2.

Scenario 4: Transmission with frequency hopping in which the first channel is a PUSCH. In a conventional technology, a start location of a second hop in PUSCH transmission with frequency hopping is related to a quantity of RBs included in a BWP. However, when the BWP includes a plurality of frequency domain units, and transmission directions of signals on the plurality of frequency domain units are independently configured, only a part of frequency domain resources in the BWP may be used to transmit the PUSCH. If a resource indication method in the conventional technology is still used, a resource conflict may be caused. In this embodiment of this application, the start location of the second hop is related to a quantity of RBs included in a frequency domain unit in which the PUSCH is located. This is different from the conventional technology in which the start location of the second hop is related to the quantity of RBs included in the BWP. An example in which a frequency domain resource corresponding to the PUSCH on a first symbol is a second frequency domain resource, a frequency domain resource corresponding to the PUSCH on a second symbol is a third frequency domain resource, the first symbol is located before the second symbol, and the second frequency domain resource and the third frequency domain resource belong to the first frequency domain resource is used. It should be noted that the first symbol is a time domain resource occupied by a first hop of the PUSCH, and may be one symbol, or may be a plurality of symbols. Similarly, the second symbol is a time domain resource occupied by the second hop of the PUSCH, and may be one symbol, or may be a plurality of symbols. The second frequency domain resource and the third frequency domain resource are located in a same frequency domain unit. In other words, two hops of the PUSCH are located in a same frequency domain unit. It may be understood that a start location of the third frequency domain resource is related to a quantity of RBs included in a first frequency domain unit and a second offset value, and the second offset value is an offset between a start location of the second frequency domain resource and the start location of the third frequency domain resource. In an example, the second offset value is one candidate value in a first candidate value set. When the quantity of RBs included in the first frequency domain unit is greater than or equal to X, the first candidate value set includes B 1 candidate values; or when the quantity of RBs included in the first frequency domain unit is less than X, the first candidate value set includes B2 candidate values. When X is greater than or equal to 50, B 1=4; or when X is less than 50, B2=2. X may be defined in a protocol, or may be preconfigured.

For example, for PUSCH repetition Type A transmission with intra-slot frequency hopping, it is assumed that a quantity of symbols occupied by the PUSCH is $N_{symb}^{PUSCH,s}$ . In this case, a quantity of symbols occupied by an n$^{th}$ hop (that is, the first symbol) is $\lfloor N_{symb}^{PUSCH,s}/2 \rfloor$ , and a quantity of symbols occupied by an (n+1)$^{th}$ hop (that is, the second symbol) is $N_{symb}^{PUSCH,s} - \lfloor N_{symb}^{PUSCH,s}/2 \rfloor$ . A start location RB$_{\text{start}}$ of a frequency domain resource of the PUSCH satisfies:

$$RB_{start} = \begin{cases} RB_{start} & i = 0 \\ (RB_{start} + RB_{offset})mod N_{sub}^{size} & i = 1 \end{cases}$$

where

$RB_{offset}$ is the offset between the start location of the second frequency domain resource and the start location of the second frequency domain resource, and $RB_{offset}$ may be indicated by the network device. $N_{sub}^{Size}$ is the quantity of RBs included in the first frequency domain unit. It may be understood that, because $N_{sub}^{Size}$ is the quantity of RBs included in the first frequency domain unit, the $n^{th}$ hop and the $(n+1)^{th}$ hop are located in a same frequency domain unit.

For PUSCH repetition Type A transmission with inter-slot frequency hopping, it is assumed that a slot 0 is used to transmit the PUSCH once, and a slot 1 is used to transmit the PUSCH again. A start location $RB_{start}$ of a frequency domain resource of a PUSCH transmitted in a slot $n_s^{\mu}$ satisfies:

$$RB_{start}(n_s^{\mu}) = \begin{cases} RB_{start} & n_s^{\mu} \bmod 2 = 0 \\ (RB_{start} + RB_{offset}) \bmod N_{sub}^{size} & n_s^{\mu} \bmod 2 = 1 \end{cases},$$

where

$N_{sub}^{Size}$ is the quantity of RBs included in the first frequency domain unit, and $RB_{offset}$ is an offset between a frequency domain start location of a PUSCH in an $n^{th}$ slot and a frequency domain start location of a PUSCH in an $(n+1)^{th}$ slot. $RB_{offset}$ may be indicated by the network device.

For inter-slot frequency hopping with repetition Type B, refer to repetition Type A transmission with inter-slot frequency hopping. Details are not described herein again.

For PUSCH repetition Type B transmission with inter-repetition frequency hopping, in comparison with FIG. 9, an example in which a quantity of repetitions of the PUSCH is 3 is used. A start location $RB_{start}$ of a frequency domain resource of a PUSCH in an $n^{th}$ transmission satisfies:

$$RB_{start}(n) = \begin{cases} RB_{start} & n \bmod 2 = 0 \\ (RB_{start} + RB_{offset}) \bmod N_{sub}^{size} & n \bmod 2 = 1 \end{cases},$$

where

$N_{sub}^{Size}$ is the quantity of RBs included in the first frequency domain unit, and $RB_{offset}$ is an offset between a frequency domain start location of a PUSCH in a first repetition and a frequency domain start location of a PUSCH in a second repetition. $RB_{offset}$ may be indicated by the network device.

It should be noted that, for a repetition transmission of the PUSCH, when the PUSCH is repeatedly transmitted on the plurality of frequency domain units included in the BWP, it is inevitable that a frequency domain unit that cannot be used to transmit the PUSCH is encountered. In this case, the current transmission of the PUSCH is canceled. To provide more transmission opportunities for the PUSCH and improve PUSCH transmission reliability, in different time units, the PUSCH may be located in different frequency domain units.

In an example, in this embodiment of this application, it may be predefined or preconfigured or the network device indicates a correspondence between a frequency domain unit included in the BWP and a time unit. Different time units may correspond to a same frequency domain unit or different frequency domain units. It may alternatively be considered that there is a correspondence between a plurality of frequency domain units included in the BWP and a time unit. When sending the PUSCH, the terminal device may determine a used frequency domain unit based on the correspondence and a time unit in which the to-be-sent PUSCH is located. That is, the terminal device may select the frequency domain unit corresponding to the time unit in which the PUSCH is located. It should be noted that the correspondence between the plurality of frequency domain units included in the BWP and the time unit may be predefined, or may be indicated by the network device. In addition, different time units may correspond to a same frequency domain unit or different frequency domain units.

In still another example, in this embodiment of this application, it may be predefined or preconfigured or the network device indicates a correspondence between a frequency domain unit included in the BWP and an $n^{th}$ transmission. Different transmissions may correspond to a same frequency domain unit or different frequency domain units. It may alternatively be considered that there is a correspondence between a plurality of frequency domain units included in the BWP and different transmissions. When sending the PUSCH, the terminal device may determine a used frequency domain unit based on the correspondence and a specific transmission of the to-be-sent PUSCH. It should be noted that a correspondence between a plurality of frequency domain units included in the BWP and an $n^{th}$ transmission may be predefined, or may be indicated by the network device. In addition, different transmissions may correspond to a same frequency domain unit or different frequency domain units.

In an alternative solution, the network device may indicate, by using signaling, a plurality of frequency domain units that can be used to transmit the PUSCH. The terminal device repeatedly transmits the PUSCH on the plurality of frequency domain units included in the BWP. When encountering a frequency domain unit that cannot be used to transmit the PUSCH, the terminal device may select, based on a specific rule from the plurality of frequency domain units that can be used to transmit the PUSCH, a frequency domain unit used for the current PUSCH transmission. For example, the terminal device may use, as a new frequency domain unit for transmitting the PUSCH, a frequency domain unit with a largest index or a smallest index in the plurality of frequency domain units that can be used to transmit the PUSCH. It may be understood that the plurality of frequency domain units that can be used to transmit the PUSCH are a part or all of the plurality of frequency domain units included in the BWP.

It may be understood that, when an invalid slot or an invalid symbol is encountered during PUSCH transmission, the current PUSCH sending should be canceled. For example, when a PUSCH in repetition Type A transmission encounters a downlink slot or a downlink symbol, the PUSCH is not sent in the downlink slot or the downlink symbol. For another example, if a PUSCH in repetition Type B transmission encounters, in one slot, a quantity of invalid symbols greater than a quantity of symbols of the PUSCH, the current PUSCH transmission should be canceled.

Optionally, when sending of the PUSCH on a specific frequency domain unit is canceled, the terminal device may re-determine one frequency domain unit based on the correspondence between the frequency domain unit included in the BWP and a time unit, to continue to transmit the PUSCH. For example, the terminal device selects, based on a specific rule, one frequency domain unit from the plurality of frequency domain units that can be used to transmit the PUSCH, to send the PUSCH. If the terminal device sends the PUSCH with repetition Type B on the frequency domain unit, the terminal device determines, based on the correspondence between the frequency domain unit included in the BWP and the time unit, that PUSCH transmission on the frequency domain unit is canceled. In this case, the terminal device may re-determine one frequency domain unit based on the correspondence between the frequency domain unit included in the BWP and the time unit, to continue to transmit the PUSCH. Alternatively, the terminal device selects, in descending or ascending order of indexes of frequency domain units, a $1^{st}$ frequency domain unit that can be used to transmit the PUSCH for transmission. Optionally, if the frequency domain unit re-determined by the terminal device based on the correspondence between the frequency domain unit included in the BWP and the time unit still cannot be used to transmit the PUSCH, the current PUSCH transmission is canceled. Alternatively, the terminal device re-selects, based on the specific rule from the plurality of frequency domain units that can be used to transmit the PUSCH, a frequency domain unit used for the current PUSCH transmission. For example, a $1^{st}$ frequency domain unit that can be used to transmit the PUSCH may be selected in ascending or descending order of indexes of frequency domain units for transmission.

Optionally, the terminal device transmits the PUSCH on a target frequency domain resource on the re-determined frequency domain unit. The target frequency domain resource is related to an index D of a $1^{st}$ RB that is occupied by the PUSCH and that is of a frequency domain unit on which transmission is canceled. A manner of determining the target frequency domain resource varies with the index of the $1^{st}$ RB that is occupied by the PUSCH and that is of the frequency domain unit on which the transmission is canceled. For ease of descriptions, the following uses an example in which PUSCH transmission of the terminal device on a first frequency domain unit is canceled, and the terminal device determines to transmit the PUSCH on a second frequency domain unit. A start location of the target frequency domain resource is a $1^{st}$ RB that is occupied by the PUSCH and that is of the second frequency domain unit.

For example, an index D of a $1^{st}$ RB that is occupied by the PUSCH and that is of the first frequency domain unit is described relative to the BWP, in other words, D is an interval between the $1^{st}$ RB that is occupied by the PUSCH and that is of the first frequency domain unit and a $1^{st}$ RB of the BWP. In this case, the start location of the target frequency domain resource may be "D+offset value C", where C may be predefined, preconfigured, or indicated by the network device.

For example, the index D of the $1^{st}$ RB that is occupied by the PUSCH and that is of the frequency domain unit on which the transmission is canceled is described relative to a $1^{st}$ RB of the frequency domain unit on which the transmission is canceled. That is, D is the interval between the $1^{st}$ RB that is occupied by the PUSCH and that is of the first frequency domain unit and a $1^{st}$ RB of the first frequency domain unit. In this case, the start location of the target frequency domain resource may be D. It may be understood that D is an interval between the $1^{st}$ RB that is occupied by the PUSCH and that is of the second frequency domain unit and a $1^{st}$ RB of the second domain unit.

Scenario 5: The first channel is a channel carrying CSI. When a BWP includes a plurality of frequency domain units, and transmission directions of signals on the plurality of frequency domain units may be independently configured, an associated subband in feedback of the CSI is related to a size of one frequency domain unit. For example, a CSI-RS is sent in a first frequency domain unit, the first frequency domain unit includes M subbands, and the CSI is in one-to-one correspondence with K subbands. A quantity of RBs included in each of the K subbands is determined based on a quantity of RBs included in the first frequency domain unit, the K subbands belong to the M subbands, K is less than or equal to M, and both K and M are positive integers. Similar to the scenario 3, a quantity of RBs included in the M subbands except a 1st subband and/or a last subband is related to a start RB of the first frequency domain unit. A quantity of RBs included in a subband in the M subbands other than the 1st subband and the last subband is similar to the quantity of RBs included in the RBG in the scenario 3. For example, the BWP includes 50 PRBs, and the quantity of RBs included in the subband in the M subbands other than the 1st subband and the last subband may be 4 or 8. Correspondingly, first indication information indicates the terminal device to transmit a first frequency domain resource of the CSI. The first indication information may indicate a size of the subband in the feedback of the CSI. For details, refer to related content in the embodiment in the foregoing scenario 5. Details are not described herein again.

It may be understood that the first indication information may be carried in signaling, for example, DCI for scheduling the first channel on the first frequency domain unit. Similarly, the network device may also schedule a channel on another frequency domain unit by using other DCI. For example, the network device schedules the first channel on the first frequency domain unit by using first DCI, and the network device schedules a second channel on a fourth frequency domain unit by using second DCI. If the network device sends the first DCI and the second DCI on a same time-frequency resource, and payload sizes of the first DCI and the second DCI are the same, the terminal device needs to perform blind detection twice on the same time-frequency resource. That is, overheads of blind detection on the DCI by the terminal device are high.

Therefore, in this embodiment of this application, the first DCI and the second DCI may satisfy one or more of the following: The first DCI and the second DCI belong to different search spaces, and a time-frequency resource for blind detection on the first DCI and a time-frequency resource for blind detection on the second DCI do not overlap, or the payload sizes of the first DCI and the second DCI are the same. For example, the first DCI indicates that indication information of a resource for transmitting the first channel needs to occupy 5 bits, and the second DCI indicates that indication information of a resource for transmitting the first channel needs to occupy 10 bits. In this case, the payload sizes of the first DCI and the second DCI each are 10 bits.

It may be understood that the first DCI and the second DCI belong to different search spaces. In this way, the terminal device needs to perform blind detection on the DCI only once in one search space, thereby reducing overheads of blind detection on a PDCCH by the terminal device. The time-frequency resource for the blind detection on the first DCI and the time-frequency resource for the blind detection on the second DCI do not overlap, and the terminal device also needs to perform blind detection on the DCI only once on a same time-frequency resource. The payload sizes of the first DCI and the second DCI are the same, and the terminal device needs to decode the DCI only once based on a same payload, so that overheads of blind detection on a PDCCH by the terminal device can also be reduced. Further, the time-frequency resource for the blind detection on the first DCI may be understood as a CORESET and/or a search space (Search Space) corresponding to the first DCI. Similarly, the time-frequency resource for the blind detection on the second DCI may be understood as a CORESET and/or a search space corresponding to the second DCI.

When the payload sizes of the first DCI and the second DCI each are P, the terminal device may parse the first DCI or the second DCI based on Q, where Q is a quantity of bits required to indicate a resource for transmitting the first channel. When P is less than Q, the terminal device may extend the first DCI from P bits to Q bits, and then parse the first DCI based on the Q bits obtained through extension. For example, the first DCI occupies 3 bits, but the first DCI used for scheduling the first channel on the first frequency domain unit needs to occupy 5 bits. Because a bit field corresponding to the first DCI has only 3 bits, 0 or 1 may be added before or after the 3 bits, in other words, the first DCI is extended from the 3 bits to 5 bits, and then the first DCI is parsed based on the 5 bits. For example, if the 3 bits obtained by the terminal device from the first DCI are "101", the terminal device may parse the first DCI based on "00101". On the contrary, when P is greater than Q, the terminal device may obtain first Q bits or last Q bits of P bits of the first DCI to parse the first DCI. For example, the first DCI and the second DCI occupy 8 bits, and the first DCI used for scheduling a channel on the first frequency domain unit needs to occupy 5 bits. Because a bit field corresponding to the first DCI has 8 bits, first 5 bits or last 5 bits of the 8 bits may be obtained, in other words, 5 bits are selected from the 8 bits, and then the first DCI is parsed based on the 5 bits. For example, the 8 bits obtained by the terminal device from the first DCI are "11011010", and the terminal device may parse the first DCI based on "11011".

In this embodiment of this application, for a scenario in which a BWP includes a plurality of frequency domain units on which transmission directions of signals can be independently configured, an adaptive resource indication manner is provided, to avoid a resource conflict as much as possible.

In the foregoing embodiments provided in this application, the method provided in embodiments of this application is described from a perspective of interaction between a terminal device and a network device. To implement functions in the method provided in the foregoing embodiments of this application, the terminal device and the network device may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

An embodiment of this application provides a communication apparatus. The following describes, with reference to the accompanying drawings, communication apparatuses configured to implement the foregoing method in embodiments of this application.

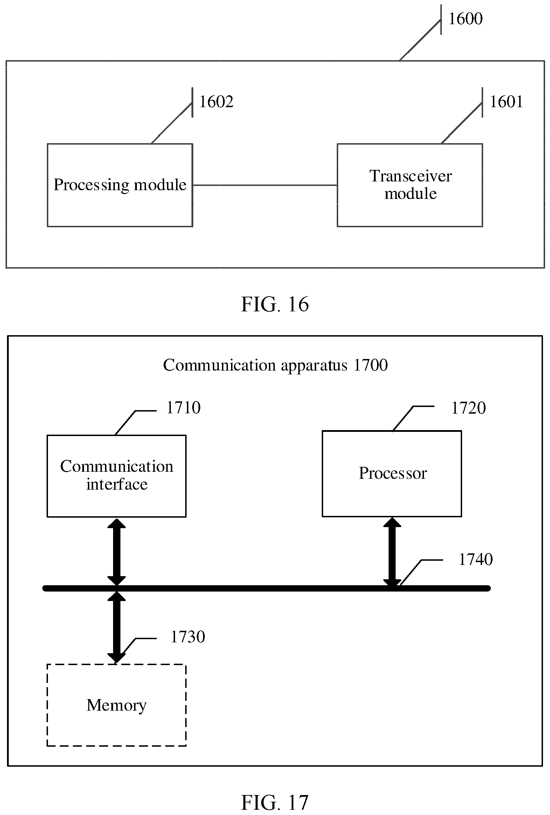

FIG. 16 is a possible example block diagram of a communication apparatus in this application. The communication apparatus 1600 may correspondingly implement a function or a step implemented by the terminal device or the network device in the foregoing method embodiments. The communication apparatus may include a transceiver module 1601 and a processing module 1602. Optionally, the communication apparatus may further include a storage module. The storage module may be configured to store instructions (code or a program) and/or data. The transceiver module 1601 and the processing module 1602 may be coupled to the storage module. For example, the processing module 1602 may read the instructions (the code or the program) and/or the data in the storage module, to implement a corresponding method. The foregoing modules may be disposed independently, or may be partially or completely integrated.

The communication apparatus 1600 may be the network device or the terminal device in the foregoing embodiments, or may be a chip used for the network device or the terminal device. For example, when the communication apparatus 1600 is the network device or the terminal device, the processing module 1602 may be, for example, a processor, and the transceiver module 1601 may be, for example, a transceiver. Optionally, the transceiver may include a radio frequency circuit, and a storage unit may be, for example, a memory. For example, when the communication apparatus 1600 is the chip used for the network device or the terminal device, the processing module 1602 may be, for example, a processor, and the transceiver module 1601 may be, for example, an input/output interface, a pin, or a circuit. The processing module 1602 may execute computer-executable instructions stored in the storage unit. Optionally, the storage unit is a storage unit in the chip, for example, a register or a buffer. Alternatively, the storage unit may be a storage unit that is in the network device, the terminal device, or a positioning management device and that is located outside the chip, for example, a read-only memory (read-only memory, ROM), another type of static storage device that can store static information and instructions, or a random access memory (random access memory, RAM).

In a possible implementation, the communication apparatus 1600 can correspondingly implement behavior and functions of the terminal device in the foregoing method embodiments. For example, the communication apparatus 1600 may be the terminal device, or may be a component (for example, a chip or a circuit) used in the terminal device. The transceiver module 1601 may be configured to support communication between the terminal device and another network entity, for example, support communication between the terminal device and the network device shown in FIG. 15. For example, the transceiver module 1601 may be configured to perform all receiving or sending operations performed by the terminal device in the embodiment shown in FIG. 15, for example, S1501 in the embodiment shown in FIG. 15, and/or configured to support another process in the technology described in this specification. The processing module 1602 is configured to perform all operations, except receiving and sending operations, performed by the terminal device in the embodiment shown in FIG. 15, for example, S1502 in the embodiment shown in FIG. 15, and/or configured to support another process in the technology described in this specification.

For example, the transceiver module 1601 may be configured to receive first indication information from the network device, where the first indication information indicates a first frequency domain resource. The processing module 1602 may be configured to determine to transmit a first channel on the first frequency domain resource. The transceiver module 1601 is further configured to transmit a first channel on the first frequency domain resource. The first frequency domain resource belongs to a first frequency domain unit of a BWP, the BWP further includes a second frequency domain unit, a transmission direction of a signal on the second frequency domain unit is indicated by second indication information, and a transmission direction of a signal on the first frequency domain unit is indicated by third indication information.

In a possible implementation, the transceiver module 1601 may be configured to perform all receiving or sending operations performed by the network device in the embodiment shown in FIG. 15, for example, S1501 in the embodiment shown in FIG. 15, and/or configured to support another process in the technology described in this specification. The processing module 1602 is configured to perform all operations, except receiving and sending operations, performed by the network device in the embodiment shown in FIG. 15, and/or configured to support another process in the technology described in this specification. For example, the processing module 1602 may be configured to determine first indication information, where the first indication information indicates a first frequency domain resource. The transceiver module 1601 may be configured to send the first indication information to a terminal device, and send or receive a first channel on the first frequency domain resource. The first frequency domain resource belongs to a first frequency domain unit of a BWP, the BWP further includes a second frequency domain unit, a transmission direction of a signal on the second frequency domain unit is indicated by second indication information, and a transmission direction of a signal on the first frequency domain unit is indicated by third indication information.

It should be understood that the processing module 1602 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1601 is an interface circuit of the apparatus, and is configured to receive a signal from another apparatus. For example, when the apparatus is implemented in a form of a chip, the transceiver module 1601 is an interface circuit used by the chip to receive a signal from another chip or apparatus, or is an interface circuit used by the chip to send a signal to another chip or apparatus.

For more detailed descriptions of the transceiver module 1601 and the processing module 1602, directly refer to related descriptions in the method embodiment shown in FIG. 15. Details are not described herein again. It should be understood that, in this embodiment of this application, the processing module 1602 may be implemented by a processor or a processor-related circuit component, and the transceiver module 1601 may be implemented by a transceiver or a transceiver-related circuit component.

An embodiment of this application further provides a communication system. Specifically, the communication system includes a network device and a terminal device, or may include more network devices and more terminal devices. For example, the communication system includes the network device and the terminal device that are configured to implement related functions in the embodiment in FIG. 15. The network device is separately configured to implement the functions of the related network device part in embodiments of this application, for example, configured to implement the functions of the related network device part in the embodiment shown in FIG. 15. The terminal device is configured to implement the functions of the related terminal device part in embodiments of this application, for example, configured to implement the functions of the related terminal device in the embodiment shown in FIG. 15. For details, refer to the related descriptions in the method embodiments. Details are not described herein again.

FIG. 17 shows a communication apparatus 1700 according to an embodiment of this application. The communication apparatus 1700 may be a network device, and can implement a function of the network device in the method provided in embodiments of this application. Alternatively, the communication apparatus 1700 may be a terminal device, and can implement a function of the terminal device in the method provided in embodiments of this application. Alternatively, the communication apparatus 1700 may be an apparatus that can support the network device or the terminal device in implementing a corresponding function in the method provided in embodiments of this application. The communication apparatus 1700 may be a chip system. In this embodiment of this application, the chip system may include a chip, or may include a chip and another discrete component.

In hardware implementation, the transceiver module 1601 may be a transceiver, and the transceiver is integrated into the communication apparatus 1700, to form a communication interface 1710.

The communication apparatus 1700 includes at least one processor 1720. The processor 1720 may be a CPU, a microprocessor, an ASIC, or one or more integrated circuits configured to control program execution in the solutions of this application, and is configured to implement or support the communication apparatus 1700 in implementing a function of the network device or the terminal device in the method provided in embodiments of this application. For details, refer to the detailed descriptions in the method examples. Details are not described herein again.

The communication apparatus 1700 may further include at least one memory 1730, configured to store program instructions and/or data. The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. The processor 1720 may cooperate with the memory 1730. The processor 1720 may execute the program instructions and/or the data stored in the memory 1730, to enable the communication apparatus 1700 to implement a corresponding method. At least one of the at least one memory may be included in the processor 1720.

The communication apparatus 1700 may further include the communication interface 1710, configured to communicate with another device or a communication network, for example, a RAN, a wireless local area network (wireless local area network, WLAN), or a wired access network, through any transceiver-type apparatus. The communication interface 1710 is configured to communicate with another device through a transmission medium, to enable an apparatus in the communication apparatus 1700 to communicate with the another device. For example, when the communication apparatus 1700 is the network device, the another device is a terminal device; or when the communication apparatus is the terminal device, the another device is a network device. The processor 1720 may receive and send data through the communication interface 1710. The communication interface 1710 may be specifically a transceiver.

A specific connection medium between the communication interface 1710, the processor 1720, and the memory 1730 is not limited in this embodiment of this application. In this embodiment of this application, the memory 1730, the processor 1720, and the communication interface 1710 are connected through a communication line 1740 in FIG. 17. A bus is represented using a thick line in FIG. 17. A manner of a connection between other components is merely an example for descriptions, and is not limited thereto. The bus may be an address bus, a data bus, a control bus, or the like. For ease of representation, only one thick line is used to represent the bus in FIG. 17, but this does not mean that there is only one bus or only one type of bus.

In this embodiment of this application, the processor 1720 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

The memory 1730 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage and optical disc storage (including a compact disc, a laser disc, an optical disc, a digital versatile disc, a Bluray disc, and the like), a magnetic disk storage medium or another magnetic storage device, or any other medium that can be configured to carry or store expected program code in a form of an instruction or a data structure and that is accessible by a computer, but is not limited thereto. The memory may exist independently, and is connected to the processor through the communication line 1740. The memory may alternatively be integrated with the processor.

The memory 1730 is configured to store computer-executable instructions for executing the solutions of this application, and the processor 1720 controls execution. The processor 1720 is configured to execute the computer-executable instructions stored in the memory 1730, to implement the resource indication method provided in the foregoing embodiments of this application.

Optionally, the computer-executable instructions in this embodiment of this application may also be referred to as application program code. This is not specifically limited in this embodiment of this application.

It should be noted that the communication apparatus in the foregoing embodiment may be a terminal device, may be a circuit, or may be a chip used in the terminal device, or another combined device, component, or the like that has the functions of the terminal device. When the communication apparatus is the terminal device, the transceiver module may be a transceiver, and may include an antenna, a radio frequency circuit, and the like; and the processing module may be a processor, for example, a CPU. When the communication apparatus is the component that has the functions of the terminal device, the transceiver module may be a radio frequency unit, and the processing module may be a processor. When the communication apparatus is a chip system, the communication apparatus may be an FPGA, a dedicated ASIC, a system on a chip (system on a chip, SoC), a CPU, a network processor (network processor, NP), a DSP, a micro-controller unit (micro-controller unit, MCU), a programmable controller (programmable logic device, PLD), or another integrated chip.

The processing module 1602 may be a processor of the chip system. The transceiver module 1601 or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

For example, the communication apparatus in the foregoing embodiment may be a chip. The chip includes a logic circuit and an input/output interface, and may further include a memory. The input/output interface may be configured to receive code instructions (where the code instructions are stored in the memory, and may be directly read from the memory, or may be read from the memory through another device), and transmit the code instructions to the logic circuit. The logic circuit may be configured to run the code instructions to perform the method in the foregoing method embodiment. Alternatively, the input/output interface may be a signal transmission interface circuit between the logic circuit and a transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a computer-readable storage medium, including instructions. When the instructions are run on a computer, the computer is enabled to perform the methods performed by the network device and the terminal device in FIG. 15.

An embodiment of this application further provides a computer program product, including instructions. When the instructions are run on a computer, the computer is enabled to perform the methods performed by the network device and the terminal device in FIG. 15.

An embodiment of this application provides a chip system. The chip system includes a processor, may further include a memory, and is configured to implement the functions of the network device and the terminal device in the foregoing methods. The chip system may include a chip, or may include a chip and another discrete component.

A part or all of the methods in embodiments of this application may be implemented by using software, hardware, firmware, or any combination thereof. When the software is used to implement the methods, a part or all of the methods may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

A person skilled in the art can make various modifications and variations to this application without departing from the scope of this application. This application is intended to cover these modifications and variations of this application provided that they fall within the scope of the following claims and their equivalent technologies.

## Claims

1. A resource indication method, comprising:

   receiving first indication information from a network device, wherein the first indication information indicates a first frequency domain resource, the first frequency domain resource belongs to a first frequency domain unit of a bandwidth part BWP, the BWP further comprises a second frequency domain unit, a transmission direction of a signal on the second frequency domain unit is indicated by second indication information, and a transmission direction of a signal on the first frequency domain unit is indicated by third indication information; and
   transmitting a first channel on the first frequency domain resource.

2. The method according to claim 1, wherein the first channel is a physical downlink control channel PDCCH, the first indication information further indicates that a resource block group A cannot be used to transmit the first channel, the resource block group A comprises a first resource block set and a second resource block set, the first resource block set belongs to the first frequency domain unit, and the second resource block set belongs to the second frequency domain unit.

3. The method according to claim 1, wherein the first channel is a PDCCH, and the method further comprises:
   receiving fourth indication information from the network device, wherein the fourth indication information indicates that a resource block group A cannot be used to transmit the first channel, the fourth indication information is different from the first indication information, the resource block group A comprises a first resource block set and a second resource block set, the first resource block set belongs to the first frequency domain unit, and the second resource block set belongs to the second frequency domain unit.

4. The method according to claim 1, wherein the first channel is a PDCCH, a protocol predefines that a resource block group A cannot be used to transmit the first channel, the resource block group A comprises a first resource block set and a second resource block set, the first resource block set belongs to the first frequency domain unit, and the second resource block set belongs to the second frequency domain unit.

5. The method according to any one of claims 2 to 4, wherein on a same time domain resource, the transmission direction of the signal on the first frequency domain unit is opposite to the transmission direction of the signal on the second frequency domain unit.

6. The method according to any one of claims 2 to 5, wherein the transmitting a first channel on the first frequency domain resource comprises:
receiving the first channel on a frequency domain resource in the first frequency domain resource other than the first resource block set.

7. The method according to claim 1, wherein the first channel is one PUSCH in physical uplink shared channel PUSCH repetition transmission, the first indication information further indicates a correspondence between P frequency domain units and Q time units, wherein P is a positive integer, and Q is an integer greater than 1, and each of the Q time units corresponds to one of the P frequency domain units; and the method further comprises:
determining the first frequency domain unit based on the correspondence and a time unit occupied by the first channel.

8. The method according to claim 1, wherein the first channel is one PUSCH in physical uplink shared channel PUSCH repetition transmission, the first indication information further indicates a plurality of frequency domain units that can be used to transmit the first channel, and the first frequency domain unit is a frequency domain unit with a largest index or a smallest index in the plurality of frequency domain units that can be used to transmit the first channel.

9. A resource indication method, comprising:

sending first indication information to a terminal device, wherein the first indication information indicates a first frequency domain resource, the first frequency domain resource belongs to a first frequency domain unit of a bandwidth part BWP, the BWP further comprises a second frequency domain unit, a transmission direction of a signal on the second frequency domain unit is indicated by second indication information, and a transmission direction of a signal on the first frequency domain unit is indicated by third indication information; and
sending or receiving a first channel on the first frequency domain resource.

10. The method according to claim 9, wherein the first channel is a physical downlink control channel PDCCH, the first indication information further indicates that a resource block group A cannot be used to transmit the first channel, the resource block group A comprises a first resource block set and a second resource block set, the first resource block set belongs to the first frequency domain unit, and the second resource block set belongs to the second frequency domain unit.

11. The method according to claim 9, wherein the first channel is a PDCCH, and the method further comprises:
sending fourth indication information, wherein the fourth indication information indicates that a resource block group A cannot be used to transmit the first channel, the fourth indication information is different from the first indication information, the resource block group A comprises a first resource block set and a second resource block set, the first resource block set belongs to the first frequency domain unit, and the second resource block set belongs to the second frequency domain unit.

12. The method according to claim 9, wherein the first channel is a PDCCH, a protocol predefines that a resource block group A cannot be used to transmit the first channel, the resource block group A comprises a first resource block set and a second resource block set, the first resource block set belongs to the first frequency domain unit, and the second resource block set belongs to the second frequency domain unit.

13. The method according to any one of claims 10 to 12, wherein on a same time domain resource, the transmission direction of the signal on the first frequency domain unit is opposite to the transmission direction of the signal on the second frequency domain unit.

14. The method according to any one of claims 10 to 13, wherein the transmitting a first channel on the first frequency domain resource comprises:
receiving the first channel on a frequency domain resource in the first frequency domain resource other than the first resource block set.

15. The method according to claim 9, wherein the first channel is one PUSCH in physical uplink shared channel PUSCH repetition transmission, the first indication information further indicates a correspondence between P frequency domain units and Q time units, wherein P is a positive integer, and Q is an integer greater than 1, and each of the Q time units corresponds to one of the P frequency domain units.

16. The method according to claim 9, wherein the first channel is one PUSCH in physical uplink shared channel PUSCH repetition transmission, the first indication information further indicates a plurality of frequency domain units that can be used to transmit the first channel, and the first frequency domain unit is a frequency domain unit with a largest index or a smallest index in the plurality of frequency domain units that can be used to transmit the first channel.

17. A communication apparatus, comprising a processing module and a transceiver module, wherein

the transceiver module is configured to receive first indication information from a network device, wherein the first indication information indicates a first frequency domain resource, the first frequency domain resource belongs to a first frequency domain unit of a bandwidth part BWP, the BWP further comprises a second frequency domain unit, a transmission direction of a signal on the second frequency domain unit is indicated by second indication information, and a transmission direction of a signal on the first frequency domain unit is indicated by third indication information;
the processing module is configured to determine the first frequency domain resource; and
the transceiver module is further configured to transmit a first channel on the first frequency domain resource.

18. The communication apparatus according to claim 17, wherein the first channel is a physical downlink control channel PDCCH, the first indication information further indicates that a resource block group A cannot be used to transmit the first channel, the resource block group A comprises a first resource block set and a second resource block set, the first resource block set belongs to the first frequency domain unit, and the second resource block set belongs to the second frequency domain unit.

19. The communication apparatus according to claim 17, wherein the first channel is a PDCCH, and the transceiver module is further configured to:
receive fourth indication information from the network device, wherein the fourth indication information indicates that a resource block group A cannot be used to transmit the first channel, the fourth indication information is different from the first indication information, the resource block group A comprises a first resource block set and a second resource block set, the first resource block set belongs to the first frequency domain unit, and the second resource block set belongs to the second frequency domain unit.

20. The communication apparatus according to claim 17, wherein the first channel is a PDCCH, a protocol predefines that a resource block group A cannot be used to transmit the first channel, the resource block group A comprises a first resource block set and a second resource block set, the first resource block set belongs to the first frequency domain unit, and the second resource block set belongs to the second frequency domain unit.

21. The communication apparatus according to any one of claims 18 to 20, wherein on a same time domain resource, the transmission direction of the signal on the first frequency domain unit is opposite to the transmission direction of the signal on the second frequency domain unit.

22. The communication apparatus according to any one of claims 18 to 21, wherein that the transceiver module is configured to transmit a first channel on the first frequency domain resource comprises:
the transceiver module receives the first channel on a frequency domain resource in the first frequency domain resource other than the first resource block set.

23. The communication apparatus according to claim 17, wherein the first channel is one PUSCH in physical uplink shared channel PUSCH repetition transmission, the first indication information further indicates a correspondence between P frequency domain units and Q time units, wherein P is a positive integer, and Q is an integer greater than 1, and each of the Q time units corresponds to one of the P frequency domain units; and the processing module is further configured to:
determine the first frequency domain unit based on the correspondence and a time unit occupied by the first channel.

24. The communication apparatus according to claim 17, wherein the first channel is one PUSCH in physical uplink shared channel PUSCH repetition transmission, the first indication information further indicates a plurality of frequency domain units that can be used to transmit the first channel, and the first frequency domain unit is a frequency domain unit with a largest index or a smallest index in the plurality of frequency domain units that can be used to transmit the first channel.

25. A resource indication communication apparatus, comprising a processing module and a transceiver module, wherein

the processing module is configured to determine first indication information, wherein the first indication information indicates a first frequency domain resource, the first frequency domain resource belongs to a first frequency domain unit of a bandwidth part BWP, the BWP further comprises a second frequency domain unit, a transmission direction of a signal on the second frequency domain unit is indicated by second indication information, and a transmission direction of a signal on the first frequency domain unit is indicated by third indication information; and
the transceiver module is configured to: send the first indication information to a terminal device, and send or receive a first channel on the first frequency domain resource.

26. The communication apparatus according to claim 25, wherein the first channel is a physical downlink control channel PDCCH, the first indication information further indicates that a resource block group A cannot be used to transmit the first channel, the resource block group A comprises a first resource block set and a second resource block set, the first resource block set belongs to the first frequency domain unit, and the second resource block set belongs to the second frequency domain unit.

27. The communication apparatus according to claim 25, wherein the first channel is a PDCCH, and the transceiver module is further configured to:
send fourth indication information, wherein the fourth indication information indicates that a resource block group A cannot be used to transmit the first channel, the fourth indication information is different from the first indication information, the resource block group A comprises a first resource block set and a second resource block set, the first resource block set belongs to the first frequency domain unit, and the second resource block set belongs to the second frequency domain unit.

28. The communication apparatus according to claim 25, wherein the first channel is a PDCCH, a protocol predefines that a resource block group A cannot be used to transmit the first channel, the resource block group A comprises a first resource block set and a second resource block set, the first resource block set belongs to the first frequency domain unit, and the second resource block set belongs to the second frequency domain unit.

29. The communication apparatus according to any one of claims 26 to 28, wherein on a same time domain resource, the transmission direction of the signal on the first frequency domain unit is opposite to the transmission direction of the signal on the second frequency domain unit.

30. The communication apparatus according to any one of claims 26 to 29, wherein that the transceiver module transmits a first channel on the first frequency domain resource comprises:
the transceiver module receives the first channel on a frequency domain resource in the first frequency domain resource other than the first resource block set.

31. The communication apparatus according to claim 25, wherein the first channel is one PUSCH in physical uplink shared channel PUSCH repetition transmission, the first indication information further indicates a correspondence between P frequency domain units and Q time units, wherein P is a positive integer, and Q is an integer greater than 1, and each of the Q time units corresponds to one of the P frequency domain units.

32. The communication apparatus according to claim 25, wherein the first channel is one PUSCH in physical uplink shared channel PUSCH repetition transmission, the first indication information further indicates a plurality of frequency domain units that can be used to transmit the first channel, and the first frequency domain unit is a frequency domain unit with a largest index or a smallest index in the plurality of frequency domain units that can be used to transmit the first channel.

33. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 8 or the method according to any one of claims 9 to 16 by using a logic circuit or by executing code instructions.

34. A computer-readable storage medium, wherein the computer-readable storage medium stores computer instructions; and when the computer instructions are executed, a computer is enabled to perform the method according to any one of claims 1 to 8 or the method according to any one of claims 9 to 16.

35. A computer program product, wherein the computer program product comprises a computer program; and when the computer program is run, the method according to any one of claims 1 to 8 or the method according to any one of claims 9 to 16 is performed.

FIG. 1

| Frequency domain unit 1 | DL | DL | DL | DL | UL |
|---|---|---|---|---|---|

| Frequency domain unit 2 | UL | UL | UL | UL | DL |
|---|---|---|---|---|---|

FIG. 2

CRB 121
CRB 120
⋮
CRB 29 ⎤
⋮    ⎥ Six PRBs
CRB 24 ⎦ corresponding
      to a 1ˢᵗ bit

BandwidtH
part (BWP)

⋮
CRB 21
CRB 20
⋮
CRB 1
CRB 0

(a)

CRB 121
CRB 120
⋮
CRB 29
⋮
CRB 26 ⎤
Bandwidth ⋮    ⎥ Six PRBs
part (BWP) CRB 21 ⎦ corresponding
CRB 20      to a 1ˢᵗ bit
⋮
CRB 1
CRB 0

(b)

CRB 121 ⎤
CRB 120 ⎥ Only five PRBs
⋮    ⎥
CRB 117 ⎦

Bandwidth
part (BWP)

⋮
CRB 26 ⎤
⋮    ⎥ Six PRBs
CRB 21 ⎦ corresponding
CRB 20      to a 1ˢᵗ bit
⋮
CRB 1
CRB 0

(c)

FIG. 3

CRB 121

CRB 120

Frequency
domain unit
5

⋮

CRB 101

CRB 100

Frequency
domain unit
4

⋮

CRB 81

CRB 80

Frequency
domain unit
3

⋮

CRB 61

CRB 60

Frequency
domain unit
2

⋮

CRB 41

CRB 40

Bandwidth
part (BWP)

⋮

CRB 29

Frequency
domain unit
1

⋮

Six PRBs
corresponding
to a 1st bit

CRB 24

⋮

CRB 21

CRB 20

⋮

CRB 1

CRB 0

FIG. 4

| | Resource set 0 | Resource set 1 | Resource set 2 | Resource set 3 |
|---|---|---|---|---|
| 111 | Resource N ⋮ Resource 2 | Resource N ⋮ Resource 2 | Resource N ⋮ Resource 2 | Resource N ⋮ Resource 2 |
| 001 000 | Resource 1 | Resource 1 | Resource 1 | Resource 1 |

Less than or equal to 2    Less than or equal to N2    Less than or equal to N3

FIG. 5

| RB 0 | RB 1 | RB 2 | RB 3 | RB 4 | RB 5 | RB 6 | RB 7 | RB 8 | RB 9 |
|---|---|---|---|---|---|---|---|---|---|

RBG 0    RBG 1    RBG 2    RBG 3    RBG 4

FIG. 6

CRB 121
CRB 120 ─ Last RBG

⋮

Bandwidth part (BWP)

CRB 25
⋮    ─ 1st RBG
CRB 21
CRB 20

⋮

CRB 1
CRB 0

FIG. 7

| RB 0 | RB 1 | RB 2 | RB 3 | RB 4 | RB 5 | RB 6 | RB 7 | RB 8 | RB 9 |
|------|------|------|------|------|------|------|------|------|------|

$RB_{start}=2$, and $L_{RBs}=3$

FIG. 8

Slot n    Slot n+1    Slot n+2    Slot n+3    ☒ PUSCH

FIG. 9

Slot n    Slot n+1    Slot n+2

☒ PUSCH

FIG. 10

$RB_{offset}$

Slot 0

◪ $n^{th}$ hop of a PUSCH

▦ $(n+1)^{th}$ hop of the PUSCH

FIG. 11

$RB_{offset}$

Slot 0        Slot 1

◪ PUSCH

▦ PUSCH repetition

FIG. 12

RB$_{offset}$

Slot 1        Slot 2        Slot 3

First PUSCH repetition transmission

Second PUSCH repetition transmission

Third PUSCH repetition transmission

FIG. 13

| Frequency domain unit 1 | DL | DL | DL | DL | UL | UL | UL | UL | UL | UL |
|---|---|---|---|---|---|---|---|---|---|---|

| Frequency domain unit 2 | UL | UL | DL | DL | DL | DL | DL | DL | DL | DL |
|---|---|---|---|---|---|---|---|---|---|---|

FIG. 14

| Network device | Terminal device |
|---|---|

S1501: First indication information, where the first indication information indicates a first frequency domain resource, the first frequency domain resource belongs to a first frequency domain unit in at least two frequency domain units included in a BWP of the terminal device, and a transmission direction of a signal on a second frequency domain unit and a transmission direction of a signal on the first frequency domain unit are independently configured

S1502

Send or receive a first channel on the first frequency domain resource

FIG. 15

1600

Processing module 1602

Transceiver module 1601

FIG. 16

Communication apparatus 1700

Communication interface 1710

Processor 1720

1740

1730

Memory

FIG. 17

<div align="center">**INTERNATIONAL SEARCH REPORT**</div>

| International application No. |
|---|
| **PCT/CN2022/132252** |

| **A.** | **CLASSIFICATION OF SUBJECT MATTER** |
|---|---|

H04W 72/04(2023.01)i

According to International Patent Classification (IPC) or to both national classification and IPC

| **B.** | **FIELDS SEARCHED** |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNPAT, CNKI, WPI, EPODOC: 方向, 传输, 指示, 资源, 频域单元, 切换, 带宽部分, 灵活, transmission, direction, indicat+, DCI, BWP, RB, resource?, switch, flexible, frequency

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 109788553 A (HUAWEI TECHNOLOGIES CO., LTD.) 21 May 2019 (2019-05-21) description, paragraphs 44-132 | 1-35 |
| Y | CN 110149710 A (SPREADTRUM COMMUNICATIONS SHANGHAI INC.) 20 August 2019 (2019-08-20) abstract, and description, paragraphs 9-28 | 1-35 |
| A | US 2021021398 A1 (GUANGDONG OPPO MOBILE TELECOMMUNICATIONS CORP. LTD.) 21 January 2021 (2021-01-21) entire document | 1-35 |
| A | IN 201937054258 A (HUAWEI TECHNOLOGIES CO., LTD.) 22 May 2020 (2020-05-22) entire document | 1-35 |
| A | US 2021185679 A1 (SHARP K.K. et al.) 17 June 2021 (2021-06-17) entire document | 1-35 |
| A | US 2020137730 A1 (HUAWEI TECHNOLOGIES CO., LTD.) 30 April 2020 (2020-04-30) entire document | 1-35 |
| A | WO 2021159515 A1 (BEIJING XIAOMI MOBILE SOFTWARE CO., LTD.) 19 August 2021 (2021-08-19) entire document | 1-35 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2023** | **28 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/132252**

| Patent document cited in search report | | | Publication date (day/month/year) | Patent family member(s) | | | Publication date (day/month/year) |
|---|---|---|---|---|---|---|---|
| CN | 109788553 | A | 21 May 2019 | WO | 2019091233 | A1 | 16 May 2019 |
| CN | 110149710 | A | 20 August 2019 | None | | | |
| US | 2021021398 | A1 | 21 January 2021 | SG | 11202101287V | A | 29 April 2021 |
| | | | | AU | 2018441779 | A1 | 04 March 2021 |
| | | | | CN | 111345089 | A | 26 June 2020 |
| | | | | KR | 20210034068 | A | 29 March 2021 |
| | | | | US | 2021184823 | A1 | 17 June 2021 |
| | | | | CA | 3109317 | A1 | 26 March 2020 |
| | | | | WO | 2020056609 | A1 | 26 March 2020 |
| | | | | JP | 2021534687 | A | 09 December 2021 |
| | | | | RU | 2765986 | C1 | 07 February 2022 |
| | | | | BR | 112021004023 | A2 | 25 May 2021 |
| | | | | EP | 3764712 | A1 | 13 January 2021 |
| IN | 201937054258 | A | 22 May 2020 | None | | | |
| US | 2021185679 | A1 | 17 June 2021 | EP | 3833137 | A1 | 09 June 2021 |
| | | | | JP | 2020022032 | A | 06 February 2020 |
| | | | | AU | 2019315163 | A1 | 18 February 2021 |
| | | | | CN | 112514491 | A | 16 March 2021 |
| | | | | WO | 2020027027 | A1 | 06 February 2020 |
| | | | | KR | 20210039378 | A | 09 April 2021 |
| US | 2020137730 | A1 | 30 April 2020 | JP | 2021153303 | A | 30 September 2021 |
| | | | | AU | 2017410632 | A1 | 28 November 2019 |
| | | | | NZ | 759178 | A | 30 September 2022 |
| | | | | RU | 2730967 | C1 | 26 August 2020 |
| | | | | JP | 2020518178 | A | 18 June 2020 |
| | | | | EP | 3614759 | A1 | 26 February 2020 |
| | | | | WO | 2018192015 | A1 | 25 October 2018 |
| | | | | ES | 2913261 | T3 | 01 June 2022 |
| | | | | KR | 20210132249 | A | 03 November 2021 |
| | | | | CA | 3060399 | A1 | 25 October 2018 |
| | | | | CN | 109644450 | A | 16 April 2019 |
| | | | | KR | 20190140983 | A | 20 December 2019 |
| | | | | AU | 2021215138 | A1 | 02 September 2021 |
| WO | 2021159515 | A1 | 19 August 2021 | CN | 111344994 | A | 26 June 2020 |
| | | | | BR | 112022016123 | A2 | 04 October 2022 |
| | | | | KR | 20220140606 | A | 18 October 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111448736